(19) Europäisches Patentamt / European Patent Office / Office européen des brevets

(11) EP 1 448 651 B1

(12) # EUROPEAN PATENT SPECIFICATION

(45) Date of publication and mention of the grant of the patent:
**30.04.2008 Bulletin 2008/18**

(21) Application number: **02791240.1**

(22) Date of filing: **14.11.2002**

(51) Int Cl.:
***C08G 18/10*** (2006.01) ***C08G 18/38*** (2006.01)
***G02B 1/04*** (2006.01)

(86) International application number:
**PCT/US2002/036470**

(87) International publication number:
**WO 2003/044070 (30.05.2003 Gazette 2003/22)**

(54) **HIGH IMPACT POLY(URETHANE UREA) POLYSULFIDES**

KERBSCHLAGZÄHE POLYHARNSTOFFURETHAN-POLYSULFIDE

POLYSULFURES DE POLY(URETHANNE UREE) HAUTEMENT RESISTANTS

(84) Designated Contracting States:
**AT BE BG CH CY CZ DE DK EE ES FI FR GB GR IE IT LI LU MC NL PT SE SK TR**

(30) Priority: **16.11.2001 US 332829 P**
**05.11.2002 US 287716**

(43) Date of publication of application:
**25.08.2004 Bulletin 2004/35**

(73) Proprietor: **PPG Industries Ohio, Inc.**
**Cleveland, OH 44111 (US)**

(72) Inventors:
- **GRAHAM, Marvin, J.**
**Monroeville, PA 15146 (US)**
- **OKOROAFOR, Michael, O.**
**Roswell, GA 30075 (US)**
- **SMITH, Robert A.**
**Murrysville, PA 15668 (US)**
- **BOJKOVA, Nina, V.**
**Monroeville, PA 15146 (US)**
- **VIDHU, Nagpal J.**
**Murrysville, PA 15668 (US)**

(74) Representative: **Polypatent**
**Postfach 40 02 43**
**51410 Bergisch Gladbach (DE)**

(56) References cited:
**EP-A- 0 936 233** **EP-A- 1 099 721**
**EP-A- 1 134 242** **US-A- 5 962 617**

- **DATABASE WPI Week 0119 Derwent Publications Ltd., London, GB; AN 2001-184779 XP002231656 & JP 2000 256435 A (MITSUI CHEM), 19 September 2000 (2000-09-19)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 448 651 B1

## Description

The present invention relates to a sulfur-containing polyureaurethane and a method of preparing said polyureaurethane.

A number of organic polymeric materials, such as plastics, have been developed as alternatives and replacements for glass in applications such as optical lenses, fiber optics, windows and automotive, nautical and aviation transparencies. These polymeric materials can provide advantages relative to glass, including, shatter resistance, lighter weight for a given application, ease of molding and ease of dying. However, the refractive indices of many polymeric materials are generally lower than that of glass. In ophthalmic applications, the use of a polymeric material having a lower refractive index will require a thicker lens relative to a material having a higher refractive index. A thicker lens is not desirable.

Thus, there is a need in the art to develop a polymeric material having an adequate refractive index and good impact resistance/strength.

The present invention is directed to a sulfur-containing polyureaurethane when at least partially cured having a refractive index of at least 1.57,an Abbe number of at least 35 and a density of less than 1.3 grams/cm$^3$.

Further, the present invention is directed to a sulfur-containing polyureaurethane comprising the reaction product of:

(a) a polyureaurethane prepolymer comprising a polycyanate chosen from polyisocyanates, polyisothiocyanates and combinations thereof, and at least one hydrogen-containing material chosen from polyols, polythiols, and materials having both hydroxyl and thiol functional groups;
(b) at least one episulfide-containing material; and
(c) an amine-containing curing agent

wherein when at least partially cured having a refractive index of at least 1.57, an Abbe number of at least 35 and a density of less than 1.3 grams/cm$^3$.

Further, the present invention is directed to a method of preparing a sulfur-containing polyureaurethane comprising the steps of:

(a) reacting a polyureaurethane prepolymer comprising a polycyanate chosen from polyisocyanates, polyisothiocyanates and combinations thereof, and at least one hydrogen-containing material chosen from polyols, polythiols, and materials having both hydroxyl and thiol functional groups;
(b) reacting said prepolymer with at least one episulfide-containing material; and
(c) reacting mixture from step (b) with an amine-containing curing agent

wherein when at least partially cured having a refractive index of at least 1.57, an Abbe number of at least 35 and a density of less than 1.3 grams/cm$^3$.

For the purposes of this specification, unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

As used herein and in the claims, the term "cyanate" refers to isocyanate materials and isothiocyanate materials that are unblocked and capable of forming a covalent bond with a reactive group such as a thiol, hydroxyl, or amine function group. In a non-limiting embodiment, the polycyanate of the present invention can contain at least two functional groups chosen from isocyanate (NCO), isothiocyanate (NCS), and combinations of isocyanate and isothiocyanate functional groups.

In alternative non-limiting embodiments, the polyureaurethane of the invention when polymerized can produce a polymerizate having a refractive index of at least 1.57, or at least 1.58, or at least 1.60, or at least 1.62. In further alternative non-limiting embodiments, the polyureaurethane of the invention when polymerized can produce a polymerizate having an Abbe number of at least 35, or at least 38, or at least 39, or at least 40, or at least 41. The refractive index and Abbe number can be determined by methods known in the art such as American Standard Test Method

(ASTM) Number D 542-00. Further, the refractive index and Abbe number can be determined using various known instruments. In a non-limiting embodiment of the present invention, the refractive index and Abbe number can be measured in accordance with ASTM D 542-00 with the following exceptions: (i) test one to two samples/specimens instead of the minimum of three specimens specified in Section 7.3; and (ii) test the samples unconditioned instead of conditioning the samples/specimens prior to testing as specified in Section 8.1. Further, in a non-limiting embodiment, an Atago, model DR-M2 Multi-Wavelength Digital Abbe. Refractometer cam be used to measure the refractive index and Abbe number of the samples/specimens.

In non-limiting embodiments, the amount of polycyanate and the amount of hydrogen-containing material can be selected such that the molar equivalent ratio of (NCO + NCS):(SH + OH) can be greater than 1.0:1.0, or at least 2.0: 1.0, or at least 2.5:1, or less than 4.5:1.0.

Polyisocyanates useful in the preparation of the polyureaurethane of the present invention are numerous and widely varied. Suitable polycyanates for use in the present invention can include but are not limited to polymeric and-$C_2$-$C_{20}$ linear, branched, cyclic and aromatic polycyanates. Non-limiting examples can include polyisocyanates and polyisothiocyanates having backbone linkages chosen from urethane linkages (-NH-C(O)-O-), thiourethane linkages (-NH-C(O)-S-), thiocarbamate linkages (-NH-C(S)-O-), dithiourethane linkages (-NH-C(S)-S-) and combinations thereof. Non-limiting examples can include but are not limited to aliphatic polyisocyanates, cycloaliphatic polyisocyanates wherein one or more of the isocyanato groups are attached directly to the cycloaliphatic ring, cycloaliphatic polyisocyanates wherein one or more of the isocyanato groups are not attached directly to the cycloaliphatic ring, aromatic polyisocyanates wherein one or more of the isocyanato groups are attached directly to the aromatic ring, and aromatic polyisocyanates wherein one or more of the isocyanato groups are not attached directly to the aromatic ring. When an aromatic polyisocyanate is used, generally care should be taken to select a material that does not cause the polyureaurethane to color (e.g., yellow).

The number average molecular weight of the polycyanate can vary widely. In alternative non-limiting embodiments, the number average molecular (Mn) can be at least 100, or at least 150, or less than 15,000, or less than 5000. The number average molecular weight can be determined using known methods. In a non-limiting embodiment, the Mn can be determined by gel permeation chromatography (GPC) using polystyrene standards.

In a non-limiting embodiment of the present invention, the polycyanate can include but is not limited to aliphatic or cycloaliphatic diisocyanates, aromatic diisocyanates, cyclic dimmers and cyclic trimers thereof, and mixtures thereof. Non-limiting examples of suitable polyisocyanates can include but are not limited to Desmodur N 3300 (hexamethylene diisocyanate trimer) which is commercially available from Bayer; Desmodur N 3400 (60% hexamethylene diisocyanate dimer and 40% hexamethylene diisocyanate trimer).

In a non-limiting embodiment, the polyisocyanate can include dicyclohexylmethane diisocyanate and isomeric mixtures thereof. As used herein and the claims, the term "isomeric mixtures" refers to a mixture of the cis-cis, trans-trans, and cis-trans isomers of the polyisocyanate. Non-limiting examples of isomeric mixtures for use in the present invention can include the trans-trans isomer of 4,4'-methylenebis(cyclohexyl isocyanate), hereinafter referred to as "PICM" (paraisocyanato cyclohexylmethane), the cis-trans isomer of PICM, the cis-cis isomer of PICM, and mixtures thereof.

In one non-limiting embodiment, three suitable isomers of 4,4'-methylenebis(cyclohexyl isocyanate) for use in the present invention are shown below.

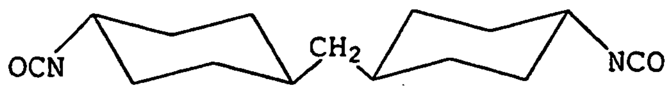

trans, trans

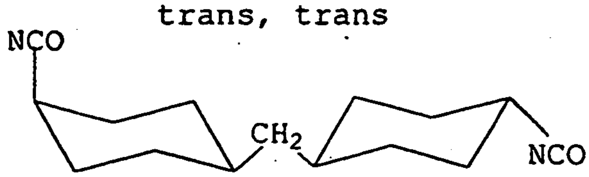

cis, trans

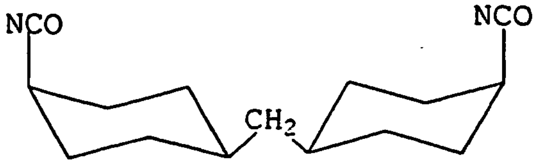

cis, cis

In one non-limiting embodiment, the PICM used in this invention can be prepared by phosgenating the 4,4'-methylenebis(cyclohexyl amine) (PACM) by procedures well known in the art such as the procedures disclosed in United States Patents 2,644,007 and 2,680,127. The PACM isomer mixtures, upon phosgenation, can produce PICM in a liquid phase, a partially liquid phase, or a solid phase at room temperature. The PACM isomer mixtures can be obtained by the hydrogenation of methylenedianiline and/or by fractional crystallization of PACM isomer mixtures in the presence of water and alcohols such as methanol and ethanol.

In a non-limiting embodiment, the isomeric mixture can contain from 10-100 percent of the trans, trans isomer of 4,4'-methylenebis(cyclohexyl isocyanate)(PICM).

Additional aliphatic and cycloaliphatic diisocyanates that can be used in alternate non-limiting embodiments of the present invention include 3-isocyanato-methyl-3,5,5-trimethyl cyclohexyl-isocyanate ("IPDI") which is commercially available from Arco Chemical, and meta-tetramethylxylene diisocyanate (1,3-bis(1-isocyanato-1-methylethyl)-benzene) which is commercially available from Cytec Industries Inc. under the tradename TMXDI.RTM. (Meta) Aliphatic Isocyanate.

As used herein and the claims, the terms aliphatic and cycloaliphatic diisocyanates refer to 6 to 100 carbon atoms linked in a straight chain or cyclized having two diisocyanate reactive end groups. In a non-limiting embodiment of the present invention, the aliphatic and cycloaliphatic diisocyanates for use in the present invention can include TMXDI and compounds of the formula $R-(NCO)_2$ wherein R represents an aliphatic group or a cycloaliphatic group.

The polycyanate can include but is not limited to polyisocyanates having at least two isocyanate groups, isothiocyanates having at least two isothiocyanate groups and mixtures thereof. Non-limiting examples of suitable polycyanates include aliphatic polyisocyanates and polyisothiocyanates; ethylenically unsaturated polyisocyanates and polyisothiocyanates; alicyclic polyisocyanates and polyisothiocyanates; aromatic polyisocyanates and polyisothiocyanates wherein the isocyanate groups are not bonded directly to the aromatic ring, e.g., α,α'-xylene diisocyanate; aromatic polyisocyanates and polyisothiocyanates wherein the isocyanate groups are bonded directly to the aromatic ring, e.g., benzene diisocyanate; aliphatic polyisocyanates and polyisothiocyanates containing sulfide linkages; aromatic polyisocyanates and polyisothiocyanates containing sulfide or disulfide linkages; aromatic polyisocyanates and polyisothiocyanates containing sulfone linkages; sulfonic ester-type polyisocyanates and polyisothiocyanates, e.g., 4-methyl-3-isocyanatobenzenesulfonyl-4'-isocyanato-phenol ester; aromatic sulfonic amide-type polyisocyanates and polyisothiocyanates; sulfur-containing heterocyclic polyisocyanates and polyisothiocyanates, e.g., thiophene-2,5-diisocyanate; halogenated, alkylated, alkoxylated, nitrated, carbodiimide modified, urea modified and biuret modified derivatives of polycyanates thereof; and dimerized and trimerized products of polycyanates thereof.

In a further non-limiting embodiment, a material of the following general formula (I) can be used in preparation of the polyureaurethane prepolymer:

(I) 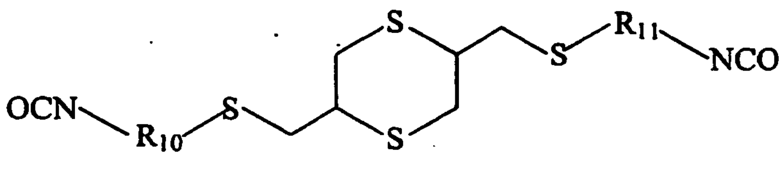

wherein $R_{10}$ and $R_{11}$ are each independently $C_1$ to $C_3$ alkyl.

Further non-limiting examples of aliphatic polyisocyanates can include ethylene diisocyanate, trimethylene diisocyanate, tetramethylene diisocyanate, hexamethylene diisocyanate, octamethylene diisocyanate, nonamethylene diisocyanate, 2,2'-dimethylpentane diisocyanate, 2,2,4-trimethylhexane diisocyanate, decamethylene diisocyanate, 2,4,4,-trimethylhexamethylene diisocyanate, 1,6,11-undecanetriisocyanate, 1,3,6-hexamethylene triisocyanate, 1,8-diisocyanato-4-(isocyanatomethyl)octane, 2,5,7-trimethyl-1,8-diisocyanato-S-(isocyanatomethyl)octane, bis(isocyanatoethyl)-carbonate, bis(isocyanatoethyl)ether, 2-isocyanatopropyl-2,6-diisocyanatohexanoate, lysinediisocyanate methyl ester and lysinetriisocyanate methyl ester.

Examples of ethylenically unsaturated polyisocyanates can include but are not limited to butene diisocyanate

and 1,3-butadiene-1,4-diisocyanate. Alicyclic polyisocyanates can include but are not limited to isophorone diisocyanate, cyclohexane diisocyanate, methylcyclohexane diisocyanate, bis(isocyanatomethyl) cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo [2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicyclo[2.2.1]-heptane and 2-isocyanatomethyl-2-(3-isocyanatopropyl)-6-(2-isocyanatoethyl)-bicyclo[2.2.1]-heptane.

Examples of aromatic polyisocyanates wherein the isocyanate groups are not bonded directly to the aromatic ring can include but are not limited to bis(isocyanatoethyl)benzene, $\alpha,\alpha,\alpha',\alpha'$-tetramethylxylene diisocyanate, 1,3-bis(1-isocyanato-1-methylethyl)benzene, bis(isocyanatobutyl)benzene, bis(isocyanatomethyl)naphthalene, bis(isocyanatomethyl)diphenyl ether, bis(isocyanatoethyl) phthalate, mesitylene triisocyanate and 2,5-di(isocyanatomethyl)furan. Aromatic polyisocyanates having isocyanate groups bonded directly to the aromatic ring can include but are not limited to phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, naphthalene diisocyanate, methylnaphthalene diisocyanate, biphenyl diisocyanate, ortho- toluidine diisocyanate, ortho-tolylidine diisocyanate, ortho-tolylene diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, triphenylmethane triisocyanate, polymeric 4,4'-diphenylmethane diisocyanate, naphthalene triisocyanate, diphenylmethane-2,4,4'-triisocyanate, 4-methyldiphenylmethane-3,5,2',4',6'-pentaisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate and dichlorocarbazole diisocyanate.

Further non-limiting examples of aliphatic and cycloaliphatic diisocyanates that can be used in the present invention include 3-isocyanato-methyl-3,5,5-trimethyl cyclohexyl-isocyanate ("IPDI") which is commercially available from Arco Chemical, and meta-tetramethylxylene diisocyanate (1,3-bis(1-isocyanato-1-methylethyl)-benzene) which is commercially available from Cytec Industries Inc. under the tradename TMXDI.RTM. (Meta) Aliphatic Isocyanate.

In a non-limiting embodiment of the present invention, the aliphatic and cycloaliphatic diisocyanates for use in the present invention can include TMXDI and compounds of the formula $R-(NCO)_2$ wherein R represents an aliphatic group or a cycloaliphatic group.

Non-limiting examples of polyisocyanates can include aliphatic polyisocyanates containing sulfide linkages such as thiodiethyl diisocyanate, thiodipropyl diisocyanate, dithiodihexyl diisocyanate, dimethylsulfone diisocyanate, dithiodimethyl diisocyanate, dithiodiethyl diisocyanate, dithiodipropyl diisocyanate and dicyclohexylsulfide-4,4'-diisocyanate. Non-limiting examples of aromatic polyisocyanates containing sulfide or disulfide linkages include but are not limited to diphenylsulfide-2,4'-diisocyanate, diphenylsulfide-4,4'-diisocyanate, 3,3'-dimethoxy-4,4'-diisocyanatodibenzyl thioether, bis(4-isocyanatomethylbenzene)-sulfide, diphenyldisulfide-4,4'-diisocyanate, 2,2'-dimethyldiphenyldisulfide-5,5'-diisocyanate, 3,3'-dimethyldiphenyldisulfide-5,5'-diisocyanate, 3,3'-dimethyldiphenyldisulfide-6,6'-diisocyanate, 4,4'-dimethyldiphenyldisulfide-5,5'-diisocyanate, 3,3'-dimethoxydiphenyldisulfide-4,4'-diisocyanate and 4,4'-dimethoxydiphenyldisulfide-3,3'-diisocyanate.

Non-limiting examples polyisocyanates can include aromatic polyisocyanates containing sulfone linkages such as diphenylsulfone-4,4'-diisocyanate, diphenylsulfone-3,3'-diisocyanate, benzidinesulfone-4,4'-diisocyanate, diphenylmethanesulfone-4,4'-diisocyanate, 4-methyldiphenylmethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyldiphenylsulfone-3,3'-diisocyanate and 4,4'-dichlorodiphenylsulfone-3,3'-diisocyanate.

Non-limiting examples of aromatic sulfonic amide-type polyisocyanates for use in the present invention can include 4-methyl-3-isocyanato-benzene-sulfonylanilide-3'-methyl-4'-isocyanate, dibenzenesulfonyl-ethylenediamine-4,4'-diisocyanate, 4,4'-methoxybenzenesulfonyl-ethylenediamine-3,3'-diisocyanate and 4-methyl-3-isocyanato-benzenesulfonylanilide-4-ethyl-3'-isocyanate.

In alternative non-limiting embodiments, the polyisothiocyanate can include aliphatic polyisothiocyanates; alicyclic polyisothiocyanates, such as but not limited to cyclohexane diisothiocyanates; aromatic polyisothiocyanates wherein the isothiocyanate groups are not bonded directly to the aromatic ring, such as but not limited to $\alpha,\alpha'$-xylene diisothiocyanate; aromatic polyisothiocyanates wherein the isothiocyanate groups are bonded directly to the aromatic ring, such as but not limited to phenylene diisothiocyanate; heterocyclic polyisothiocyanates, such as but not limited to 2,4,6-triisothicyanato-1,3,5-triazine and thiophene-2,5-diisothiocyanate; carbonyl polyisothiocyanates; aliphatic polyisothiocyanates containing sulfide linkages, such as but not limited to thiobis(3-isothiocyanatopropane); aromatic polyisothiocyanates containing sulfur atoms in addition to those of the isothiocyanate groups; halogenated, alkylated, alkoxylated, nitrated, carbodiimide modified, urea modified and biuret modified derivatives of these polyisothiocyanates; and dimerized and trimerized products of these polyisothiocyanates.

Non-limiting examples of aliphatic polyisothiocyanates include 1,2-diisothiocyanatoethane, 1,3-diisothiocyanatopropane, 1,4-diisothiocyanatobutane and 1,6-diisothiocyanatohexane. Non-limiting examples of aromatic polyisothiocyanates having isothiocyanate groups bonded directly to the aromatic ring can include but are not limited to 1,2-diisothiocyanatobenzene, 1,3-diisothiocyanatobenzene, 1,4-diisothiocyanatobenzene, 2,4-diisothiocyanatotoluene, 2,5-diisothiocyanato-m-xylene, 4,4'-diisothiocyanato-1,1'-biphenyl, 1,1'-methylenebis(4-isothiocyanatobenzene), 1,1'-methylenebis(4-isothiocyanato-2-methylbenzene), 1,1'-methylenebis(4-isothiocyanato-3-methylbenzene), 1,1'-(1,2-ethane-diyl)bis(4-isothiocyanatobenzene), 4,4'-diisothiocyanatobenzophenenone, 4,4'-diisothiocyanato-3,3'-dimethylbenzophenone, benzanilide-3,4'-diisothiocyanate, diphenylether-4,4'-diisothiocyanate and diphenylamine-4,4'-diisothiocyanate.

Suitable carbonyl polyisothiocyanates can include but are not limited to hexane-dioyl diisothiocyanate, nonaedioyl diisothiocyanate, carbonic diisothiocyanate, 1,3-benzenedicarbonyl diisothiocyante, 1,4-benzenedicarbonyl diisothiocyanate and (2,2'-bipyridine)-4,4'-dicarbonyl diisothiocyanate. Non-limiting examples of aromatic polyisothiocyanates containing sulfur atoms in addition to those of the isothiocyanate groups, can include but are not limited to 1-isothiocyanato-4-[(2-isothiocyanato)sulfonyl]benzene, thiobis(4-isothiocyanatobenzene), sulfonylbis(4-isothiocyanatobenzene), sulfinylbis(4-isothiocyanatobenzene), dithiobis(4-isothiocyanatobenzene), 4-isothiocyanato-1-[(4-isothiocyanatophenyl)-sulfonyl]-2-methoxybenzene, 4-methyl-3-isothicyanatobenzene-sulfonyl-4'-isothiocyanate phenyl ester and 4-methyl-3-isothiocyanatobenzene-sulfonylanilide-3'-methyl-4'-isothiocyanate.

Non-limiting examples of polycyanates having isocyanate and isothiocyanate groups can include aliphatic, alicyclic, aromatic, heterocyclic, or contain sulfur atoms in addition to those of the isothiocyanate groups. Non-limiting examples of such polycyanates include but are not limited to 1-isocyanato-3-isothiocyanatopropane, 1-isocanato-5-isothiocyanatopentane, 1-isocyanato-6-isothiocyanatohexane, isocyanatocarbonyl isothiocyanate, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanato-4'-isothiocyanato-diphenyl sulfide and 2-isocyanato-2'-isothiocyanatodiethyl disulfide.

In a non-limiting embodiment, the polycyanate can be reacted with a hydrogen-containing material chosen from polyols, polythiols and materials containing both hydroxyl and thiol functional groups, to form the polyureaurethane prepolymer of the present invention.

Suitable OH-containing materials for use in the present invention can include but are not limited to polyether polyols, polyester polyols, polycaprolactone polyols, polycarbonate polyols, and mixtures thereof.

Polyether polyols and methods for their preparation are known to those skilled in the art. Many polyether polyols of various types and molecular weight are commercially available from various manufacturers. Non-limiting examples of polyether polyols can include but are not limited to polyoxyalkylene polyols, and polyalkoxylated polyols. Polyoxyalkylene polyols can be prepared in accordance with known methods. In a non-limiting embodiment, a polyoxyalkylene polyol can be prepared by condensing an alkylene oxide, or a mixture of alkylene oxides, using acid- or base-catalyzed addition with a polyhydric initiator or a mixture of polyhydric initiators, such as but not limited to ethylene glycol, propylene glycol, glycerol, and sorbitol. Non-limiting examples of alkylene oxides can include ethylene oxide, propylene oxide, butylene oxide, amylene oxide, aralkylene oxides, such as but not limited to styrene oxide, mixtures of ethylene oxide and propylene oxide. In a further non-limiting embodiment, polyoxyalkylene polyols can be prepared with mixtures of alkylene oxide using random or stepwise oxyalkylation. Non-limiting examples of such polyoxyalkylene polyols include polyoxyethylene, such as but not limited to polyethylene glycol, polyoxypropylene, such as but not limited to polypropylene glycol.

In a non-limiting embodiment, polyalkoxylated polyols can be represent by the following general formula:

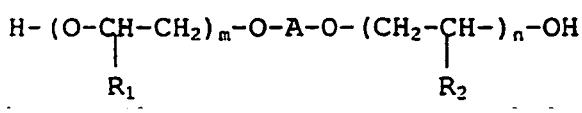

wherein m and n can each be a positive integer, the sum of m and n being from 5 to 70; $R_1$ and $R_2$ are each hydrogen, methyl or ethyl; and A is a divalent linking group such as a straight or branched chain alkylene which can contain from 1 to 8 carbon atoms, phenylene, and $C_1$ to $C_9$ alkyl-substituted phenylene. The chosen values of m and n can, in combination with the chosen divalent linking group, determine the molecular weight of the polyol. Polyalkoxylated polyols can be prepared by methods that are known in the art. In a non-limiting embodiment, a polyol such as 4,4'-isopropylidenediphenol can be reacted with an oxirane-containing material such as but not limited to ethylene oxide, propylene oxide and butylene oxide, to form what is commonly referred to as an ethoxylated, propoxylated or butoxylated polyol having hydroxy functionality. Non-limiting examples of polyols suitable for use in preparing polyalkoxylate polyols can include those polyols described in United States Patent 6,187,444 B1 at column 10, lines 1-20.

As used herein and the claims, the term "polyether polyols" can include the generally known poly(oxytetramethylene) diols prepared by the polymerization of tetrahydrofuran in the presence of Lewis acid catalysts such as but not limited to boron trifluoride, tin (IV) chloride and sulfonyl chloride. Also included are the polyethers prepared by the copolymerization of cyclic ethers such as but not limited to ethylene oxide, propylene oxide, trimethylene oxide, and tetrahydrofuran with aliphatic diols such as but not limited to ethylene glycol, 1,3-butanediol, 1,4-butanediol, diethylene glycol, dipropylene glycol, 1,2-propylene glycol and 1,3-propylene glycol. Compatible mixtures of polyether polyols can also be used. As used herein, "compatible" means that the polyols are mutually soluble in each other so as to form a single phase.

Polycarbonate polyols are known in the art and are commercially available such as Ravecarb™ 107 (Enichem S.p.A.). In a non-limiting embodiment, the polycarbonate polyol can be produced by reacting an organic glycol such as a diol, such as those described hereinafter and in connection with the glycol component of the polyureaurethane, and a dialkyl carbonate,such as described in United States Patent 4,160,853. In a non-limiting embodiment, the polyol can include polyhexamethyl carbonate such as $H\text{-}(O\text{-}C(O)\text{-}O\text{-}(CH_2)_6)_n\text{-}OH$, wherein n is an integer from 4 to 24, or from 4 to 10, or from 5 to 7.

In a non-limiting embodiment, the glycol material can comprise low molecular weight polyols such as polyols having a molecular weight of less than 500, and compatible mixtures thereof. As used herein, "compatible" means that the glycols are mutually soluble in each other so as to form a single phase. Non-limiting examples of these polyols can include but are not limited to low molecular weight diols and triols. In a further non-limiting embodiment, the amount of triol chosen is such to avoid a high degree of cross-linking in the polyurethane. A high degree of cross-linking can result in a thermoset polyurethane that is not formable by moderate heat and pressure. The organic glycol typically contains from 2 to 16, or from 2 to 6, or from 2 to 10, carbon atoms. Non-limiting examples of such glycols can include but are not limited to ethylene glycol, propylene glycol, diethylene glycol, triethylene glycol, tetraethylene glycol, dipropylene glycol, tripropylene glycol, 1,2-, 1,3- and 1,4-butanediol, 2,2,4-trimethyl-1,3-pentanediol, 2-methyl-1,3-pentanediol, 1,3-2,4- and 1,5-pentanediol, 2,5- and 1,6-hexanediol, 2,4-heptanediol, 2-ethyl-1,3-hexanediol, 2,2-dimethyl-1,3-propanediol, 1,8-octanediol, 1,9-nonanediol, 1,10-decanediol, 1,4-cyclohexanediol, 1,4-cyclohexanedimethanol, 1,2-bis(hydroxyethyl)-cyclohexane, glycerin, tetramethylolmethane, such as but not limited to pentaerythritol, trimethylolethane and trimethylolpropane; and isomers thereof.

In alternate non-limiting embodiments, the OH-containing material can have a weight average molecular weight of at least 200, or at least 1000, or at least 2000. In alternate non-limiting embodiments, the OH-containing material can have a weight average molecular weight of less than 10000, or less than 15000, or less than 20000, or less than 32000.

In a non-limiting embodiment, the polyether-containing polyol material for use in the present invention can include teresters produced from at least one low molecular weight dicarboxylic acid, such as adipic acid.

Polyether glycols for use in the present invention can include but are not limited to polytetramethylene ether glycol.

In a non-limiting embodiment, the hydrogen-containing material can comprise block polymers including blocks of ethylene oxide-propylene oxide and/or ethylene oxide-butylene oxide. In a non-limiting embodiment, the hydrogen-containing material can comprise a block polymer of the following chemical formula:

$$H\text{-}(O\text{-}CRRCRR\text{-}Y_n)_a\text{-}(CRRCRR\text{-}Y_n\text{-}O)_b\text{-}(CRRCRR\text{-}Y_n\text{-}O)_c\text{-}H$$

wherein R can represent hydrogen or $C_1$-$C_6$ alkyl; Y can represent $CH_2$; n can be an integer from 0 to 6; a, b, and c can each be an integer from 0 to 300, wherein a, b and c are chosen such that the weight average molecular weight of the polyol does not exceed 32,000.

In a further non-limiting embodiment, Pluronic R, Pluronic L62D, Tetronic R and Tetronic, which are commercially available from BASF, can be used as the hydrogen-containing material in the present invention.

Non-limiting examples of suitable polyols for use in the present invention include straight or branched chain alkane polyols, such as but not limited to 1,2-ethanediol, 1,3-propanediol, 1,2-propanediol, 1,4-butanediol, 1,3-butanediol, glycerol, neopentyl glycol, trimethylolethane, trimethylolpropane, di-trimethylolpropane, erythritol, pentaerythritol and di-pentaerythritol; polyalkylene glycols, such as but not limited to diethylene glycol, dipropylene glycol and higher polyalkylene glycols such as but not limited to polyethylene glycols which can have number average molecular weights of from 200 to 2,000 grams/mole; cyclic alkane polyols, such as but not limited to cyclopentanediol, cyclohexanediol, cyclohexanetriol, cyclohexanedimethanol, hydroxypropylcyclohexanol and cyclohexanediethanol; aromatic polyols, such as but not limited to dihydroxybenzene, benzenetriol, hydroxybenzyl alcohol and dihydroxytoluene; bisphenols, such as, 4,4'-isopropylidenediphenol; 4,4'-oxybisphenol, 4,4'-dihydroxybenzophenone, 4,4'-thiobisphenol, phenolphthlalein, bis(4-hydroxyphenyl)methane, 4,4'-(1,2-ethenediyl)bisphenol and 4,4'-sulfonylbisphenol; halogenated bisphenols, such as but not limited to 4,4'-isopropylidenebis(2,6-dibromophenol), 4,4'-isopropylidenebis(2,6-dichlorophenol) and 4,4'-isopropylidenebis(2,3,5,6-tetrachlorophenol); alkoxylated bisphenols, such as but not limited to alkoxylated 4,4'-isopropylidenediphenol which can have from 1 to 70 alkoxy groups, for example, ethoxy, propoxy, α-butoxy and β-butoxy groups; and biscyclohexanols, which can be prepared by hydrogenating the corresponding bisphenols, such as

but not limited to 4,4'-isopropylidene-biscyclohexanol, 4,4'-oxybiscyclohexanol, 4,4'-thiobiscyclohexanol and bis(4-hydroxycyclohexanol)methane; polyurethane polyols, polyester polyols, polyether polyols, poly vinyl alcohols, polymers containing hydroxy functional acrylates, polymers containing hydroxy functional methacrylates, and polymers containing allyl alcohols.

In a non-limiting embodiment, the polyol can be chosen from multifunctional polyols, including but not limited to trimethylopropane, ethoxylated trimethylolpropane, pentaerythritol.

In a further non-limiting embodiment, the polyol can be a polyurethane prepolymer having two or more hydroxy functional groups. Such polyurethane prepolymers can be prepared from any of the above-listed polyols and aforementioned polyisocyanates. In a non-limiting embodiment, the OH:NCO molar equivalent ratio can be chosen such that essentially no free NCO groups are produced in preparing the polyurethane prepolymer. In the present invention, the equivalent ratio of NCO (i.e., isocyanate) to OH present in the polyether-containing polyureaurethane prepolymer can be an amount of from 2.0 to less than 4.5 NCO/1.0 OH.

In alternative non-limiting embodiments, the polyurethane prepolymer can have a number average molecular weight (Mn) of less than 50,000, or less than 20,000, or less than 10,000 grams / mole. The Mn can be determined using a variety of known methods. In a non-limiting embodiment, the Mn can be determined by gel permeation chromatography (GPC) using polystyrene standards.

In a non-limiting embodiment, the polythiol for use in the present invention can have at least two thiol groups-Non-limiting examples of suitable polythiols can include but are not limited to aliphatic polythiols, cycloaliphatic polythiols, aromatic polythiols, heterocyclic polythiols, polymeric polythiols and mixtures thereof. The hydrogen-containing material can have linkages including but not limited to ether linkages (-O-), sulfide linkages (-S-), polysulfide linkages ($-S_x-$, wherein x is at least 2, or from 2 to 4) and combinations of such linkages. As used herein and the claims, the terms "thiol," "thiol group," "mercapto" or "mercapto group" refer to an -SH group which is capable of forming a thiourethane linkage, (i.e., -NH-C(O)-S-) with an isocyanate group or a dithioruethane linkage (i.e., -NH-C(S)-S-) with an isothiocyanate group.

Non-limiting examples of suitable polythiols can include but are not limited to 2,5-dimercaptomethyl-1,4-dithiane, 2,2'-thiodiethanethiol, pentaerythritol tetrakis(3-mercaptopropionate), pentaerythritol tetrakis(2-mercaptoacetate), trimethylolpropane tris(3-mercaptopropionate), trimethylolpropane tris(2-mercaptoacetate), 4-mercaptomethyl-3,6-dithia-1,8-octanedithiol, 4-tert-butyl-1,2-benzenedithiol, 4,4'-thiodibenzenethiol, benzenedithiol, ethylene glycol di(2-mercaptoacetate), ethylene glycol di(3-mercaptopropionate), poly(ethylene glycol) di(2-mercaptoacetate) and poly(ethylene glycol) di(3-mercaptopropionate), and mixtures thereof.

The polythiol can be chosen from materials represented by the following general formula (II),

(II)

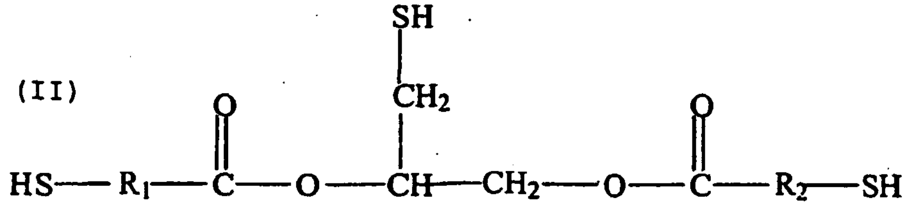

wherein $R_1$ and $R_2$ can each be independently chosen from straight or branched chain alkylene, cyclic alkylene, phenylene and $C_1$-$C_9$ alkyl substituted phenylene. Non-limiting examples of straight or branched chain alkylene can include but are not limited to methylene, ethylene, 1,3-propylene, 1,2-propylene, 1,4-butylene, 1,2-butylene, pentylene, hexylene, heptylene, octylene, nonylene, decylene, undecylene, octadecylene and icosylene. Non-limiting examples of cyclic alkylenes can include but are not limited to cyclopentylene, cyclohexylene, cycloheptylene, cyclooctylene, and alkyl-substituted derivatives thereof. In a non-limiting embodiment, the divalent linking groups $R_1$ and $R_2$ can be chosen from phenylene and alkyl-substituted phenylene, such as - methyl, ethyl, propyl, isopropyl and nonyl substituted phenylene. In a further non-limiting embodiment, $R_1$ and $R_2$ are each methylene or ethylene.

The polythiol represented by general formula II can be prepared by any known method. In a non-limiting embodiment, the polythiol of formula (II) can be prepared from an esterification or transesterification reaction between 3-mercapto-1,2-propanediol (Chemical Abstract Service (CAS) Registry No. 96-27-5) and a thiol functional carboxylic acid or carboxylic acid ester in the presence of a strong acid catalyst, such as but not limited to methane sulfonic acid, with the concurrent removal of water or alcohol from the reaction mixture. A non-limiting example of a polythiol of formula II includes a structure wherein $R_1$ and $R_2$ are each methylene.

In a non-limiting embodiment, the polythiol represented by general formula II can be thiglycerol bis(2-mercaptoacetate). As used herein and the claims, the term "thiglycerol bis(2-mercaptoacetate)" refers to any related co-product

oligomeric species and polythiol monomer compositions containing residual starting materials. In a non-limiting embodiment, oxidative coupling of thiol groups can occur when washing the reaction mixture resulting from the esterification of 3-mercapto-1,2-propanediol and a thiol functional carboxylic acid, such as but not limited to 2-mercaptoacetic acid, with excess base, such as but not limited to aqueous ammonia. Such an oxidative coupling can result in the formation of oligomeric polythiol species having disulfide linkages, such as but not limited to -S-S- linkages.

Suitable polythiols for use in the present invention can include but are not limited to polythiol oligomers having disulfide linkages, which can be prepared from the reaction of a polythiol having at least two thiol groups and sulfur in the presence of a basic catalyst. In a non-limiting embodiment, the molar equivalent ratio of polythiol monomer to sulfur can be from m to (m-1) wherein m can represent an integer from 2 to 21. The polythiol can be chosen from the above-mentioned examples, such as but not limited to 2,5-dimercaptomethyl-1,4-dithiane. In alternative non-limiting embodiments, the sulfur can be in the form of crystalline, colloidal, powder and sublimed sulfur, and can have a purity of at least 95 percent or at least 98 percents.

Non-limiting examples of co-product oligomeric species can include materials represented by the following general formula III:

(III)

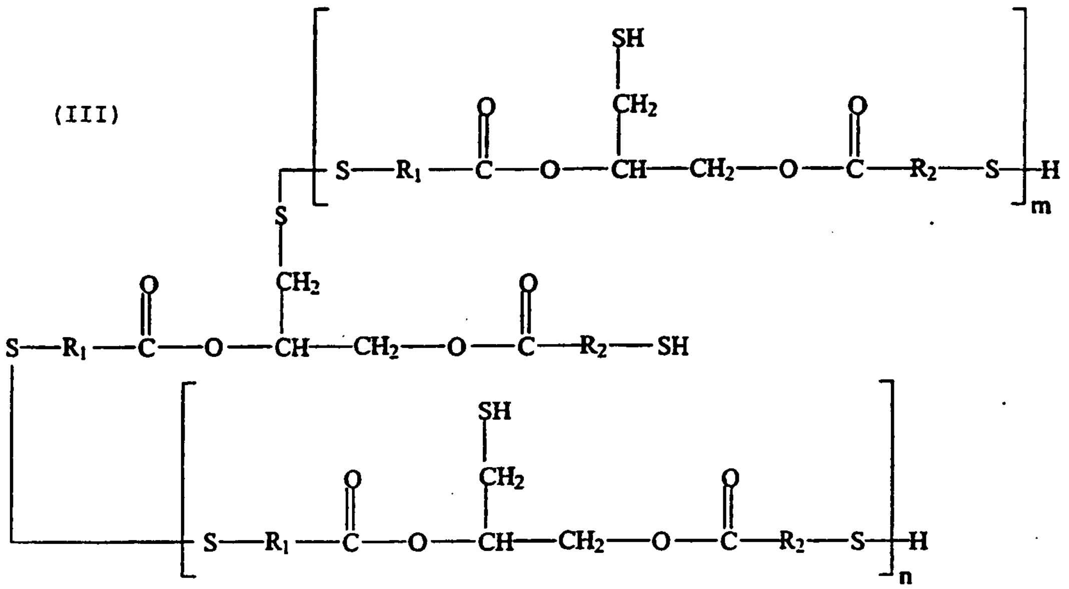

wherein $R_1$ and $R_2$ can be as described above, n and m can be independently an integer from 0 to 21 and (n + m) can be at least 1.

In another non-limiting embodiment, the polythiol oligomer can have disulfide linkages and can include materials represented by the following general formula IV,

(IV)

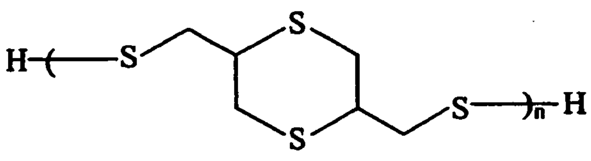

wherein n can represent an integer from 1 to 21. In a non-limiting embodiment, the polythiol oligomer represented by general formula IV can be prepared by the reaction of 2,5-dimeracaptomethyl-1,4-dithiane with sulfur in the presence of a basic catalyst, as described previously herein.

Non-limiting examples of suitable materials having both hydroxyl and thiol groups can include but are not limited to 2-mercaptoethanol, 3-mercapto-1,2-propanediol, glycerin bis(2-mercaptoacetate), glycerin bis(3-mercaptopropionate), 1-hydroxy-4-mercaptocyclohexane, 2,4-dimercaptophenol, 2-mercaptohydroquinone, 4-mercaptophenol, 1,3-dimercapto-2-propanol, 2,3-dimercapto-1-propanol, 1,2-dimercapto-1,3-butanediol, trimethylolpropane bis(2-mercaptoacetate), trimethylolpropane bis(3-mercaptopropionate), pentaerythritol mono(2-mercaptoacetate), pentaerythritol bis (2-mercaptoacetate), pentaerythritol tris(2-mercaptoacetate), pentaerythritol mono(3-mercaptopropionate), pentaerythritol bis(3-mercaptopropionate), pentaerythritol tris(3-mercaptopropionate), hydroxymethyl-tris(mercaptoethylthiomethyl)methane, 1-hydroxyethylthio-3-mercaptoethylthiobenzene, 4-hydroxy-4'-mercaptodiphenylsulfone, dihydroxyethyl sulfide mono(3-mercaptopropionate and hydroxyethylthiomethyl-tris(mercaptoethylthio)methane.

In alternative non-limiting embodiments, the hydrogen-containing material for use in the present invention can be chosen from polyether glycols and polyester glycols having a weight average molecular weight of at least 200, or at least 300, or at least 750; or no greater than 1,500, or no greater than 2,500, or no greater than 4,000.

Suitable polyesters for use in the present invention can include but are not limited to polycaprolactones and polyesters based on esterification of dicarboxylic acids of four to ten carbon atoms. Non-limiting examples of such dicarboxylic acids include but are not limited to adipic, succinic and sebacic acids. In alternative non-limiting embodiments, the dicarboxylic acids can esterified in the presence of low molecular weight glycols of two to ten carbon atoms, such as but not limited to ethylene glycol, propylene glycol, diethylene glycol, 1,4-butanediol, 1,6-hexanediol and 1,10-decanediol.

In a non-limiting embodiment, polyesters for use in the present invention can include polycaprolactones prepared by condensing caprolactone in the presence of difunctional active hydrogen compounds such as water or the low molecular weight glycols listed above.

The polyureaurethane prepolymer is reacted with at least one episulfide-containing material. Suitable episulfide-containing materials can have at least one, or two, or more episulfide functional groups. In a non-limiting embodiment, the episulfide-containing material can have two or more moieties represented by the following general formula V:

(V) 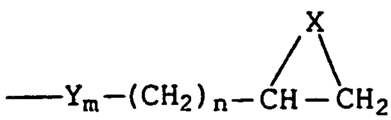

wherein X can be S or O; Y can be $C_1$ - $C_{10}$ alkyl, O, or S; m can be an integer from 0 to 2, and n can be an integer from 0 to 10. In a non-limiting embodiment, the numerical ratio of S is 50% or more, on the average, of the total of S and O constituting a three-membered ring.

The episulfide-containing material having two or more moieties represented by the formula (V) can be attached to an acyclic and/or cyclic skeleton. The acyclic skeleton can be branched or unbranched, and it can contain sulfide and/or ether linkages. In a non-limiting embodiment, the episulfide-containing material can be obtained by replacing the oxygen in an epoxy ring-containing acyclic material using sulfur, thiourea, thiocyanate, triphenylphosphine sulfide or other such reagents known in the art. In a further non-limiting embodiment, alkylsulfide-type episulfide-containing materials can be obtained by reacting various known acyclic polythiols with epichlorohydrin in the presence of an alkali to obtain an alkylsulfide-type epoxy material; and then replacing the oxygen in the epoxy ring as described above.

In alternate non-limiting embodiments, the cyclic skeleton can include the following materials:

(a) an episulfide-containing material wherein the cyclic skeleton can be an alicyclic skeleton,
(b) an episulfide-containing material wherein the cyclic skeleton can be an aromatic skeleton, and
(c) an episulfide-containing material wherein the cyclic skeleton can be a heterocyclic skeleton including a sulfur atom as a hetero-atom.

In further non-limiting embodiments, each of the above materials can contain a linkage of a sulfide, an ether, a sulfone, a ketone, and/or an ester.

Non-limiting examples of suitable episulfide-containing materials having an alicyclic skeleton can include but are not limited to 1,3- and 1,4-bis(β-epithiopropylthio)cyclohexane, 1,3- and 1,4-bis(β-epithiopropylthiomethyl)cyclohexane, bis[4-(β-epithiopropylthio)cyclohexyl] methane, 2,2-bis[4-(β-epithiopropylthio)cyclohexyl] propane, bis[4-(β-epithiopropylthio)cyclohexyl]sulfide, 4-vinyl-1-cyclohexene diepisulfide, 4-epithioethyl-1-cyclohexene sulfide, 4-epoxy-1,2-cyclohexene sulfide, 2,5-bis(β-epithiopropylthio)1,4-dithiane, and 2,5-bis(β-epithiopropylthioethylthiomethyl)-1,4-dithiane.

Non-limiting examples of suitable episulfide-containing materials having an aromatic skeleton can include but are not limited to 1,3- and 1,4-bis(β-epithiopropylthio)benzene, 1,3-and 1,4-bis(β-epithiopropylthiomethyl)benzene, bis [4-(β-epithiopropylthio)phenyl] methane, 2,2-bis(4-(β-epithiopropylthio)phenyl] propane, bis[4-(β-epithiopropylthio)phenyl] sulfide, bis[4-(β-epithiopropylthio)phenyl] sulfone, and 4,4-bis(β-epithiopropylthio)biphenyl.

Non-limiting examples of suitable episulfide-containing materials having a heterocyclic skeleton including the sulfur atom as the hetero-atom can include but are not limited to the materials represented by the following general formulas (VI) and (VII):

(VI) 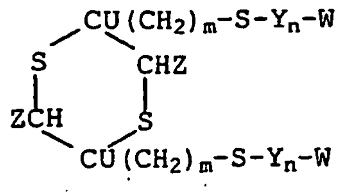

wherein m can be an integer from 1 to 5; n can be an integer from 0 to 4; U can be a hydrogen atom or an alkyl group having 1 to 5 carbon atoms; Y can be $-(CH_2CH_2S)-$; Z can be chosen from a hydrogen atom, an alkyl group having 1 to 5 carbon atoms or $-(CH_2)_mSY_nW$; W can be an epithiopropyl group represented by formula (VIII):

(VIII) 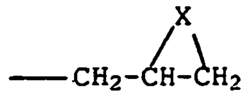

wherein X can be O or S.

(VII) 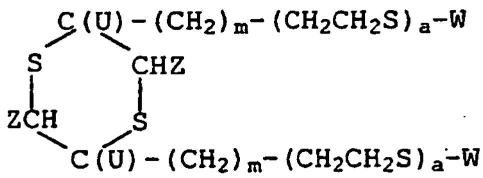

wherein m, U, W and Z can be as defined above and a can be an integer from 0 to 5.

(VII') 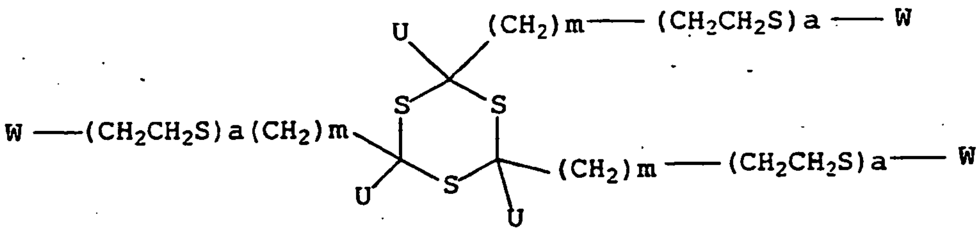

wherein m, U, W and Z can be as defined above.

Additional non-limiting examples of suitable episulfide-containing materials include but are not limited to 2,5-bis(β-epithiopropylthiomethyl)-1,4-dithiane; 2,5-bis(β-epithiopropylthioethylthiomethyl)-1,4-dithiane; 2,5-bis(β-epithiopropylthioethyl)-1,4-dithiane; 2,3,5-tri(β-epithiopropylthioethyl)-1,4-dithiane; 2,4,6-tris(β-epithiopropylmethyl)-1,3,5-trithiane; 2,4,6-tris(β-epithiopropylthioethyl)-1,3,5-trithiane; 2,4,6-tris(β-epithiopropylthiomethyl)-1,3,5-trithiane; 2,4,6-tris(β-epithiopropylthioethylthioethyl)-1,3,5-trithiane;

(IX) 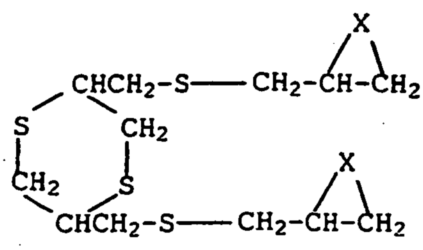

(X) 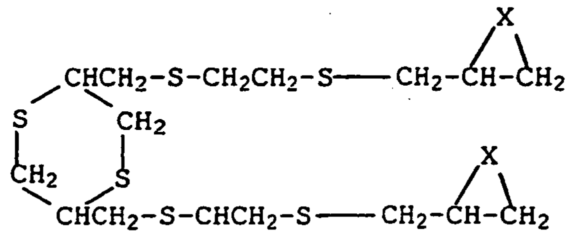

(XI) 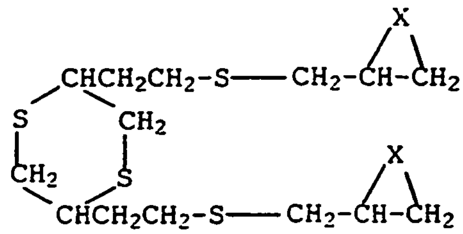

(XII) 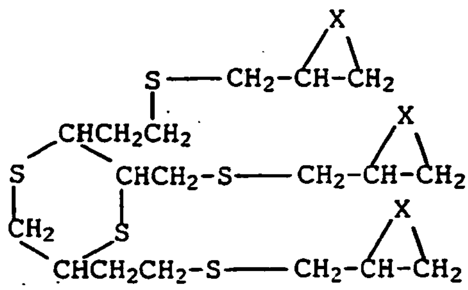

wherein X can be as defined above.

Further non-limiting examples of suitable episulfide-containing materials that can be used in the present invention are described in United States Patents 5,807,975 and 5,945,504.

In anon-limiting embodiment of the present invention, the reaction mixture of the polyureaurethane prepolymer and episulfide-containing material can be combined with an amine-containing curing agent. Non-limiting examples of suitable amine-containing curing agents can include but are not limited to aliphatic polyamines, cycloaliphatic polyamines, aromatic polyamines and mixtures thereof. In alternative non-limiting embodiments, the amine-containing curing agent can have at least two functional groups chosen from primary amine ($-NH_2$), secondary amine (-NH-) and combinations thereof. In a further non-limiting embodiment, the amine-containing curing agent can have at least two primary amine groups.

Suitable amine-containing curing agents for use in the present invention are numerous and widely varied. Non-limiting examples include but are not limited to polyamines having more than one amino group per molecule, each amino group being independently selected from primary amino ($-NH_2$) and secondary amine (-NH-) groups. In alternate non-limiting embodiments, the amine-containing curing agent can be chosen from aliphatic polyamines, cycloaliphatic polyamines, aromatic polyamines, and mixtures thereof. In a further non-limiting embodiment, the amino groups are all primary groups. In an embodiment wherein it is desirable to produce a polyureaurethane having low color, the amine-curing agent can be chosen such that it has relatively low color and/or it can be manufactured and/or stored in a manner as to prevent the amine from developing a color (e.g., yellow).

Suitable amine-containing curing agents for use in the present invention can include but are not limited to materials having the following chemical formula:

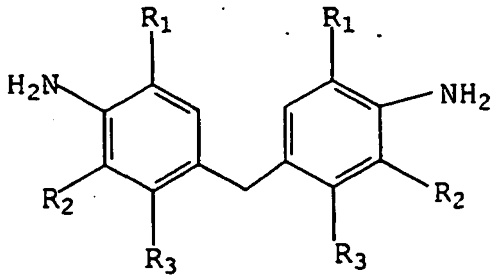

wherein $R_1$ and $R_2$ can each be independently chosen from methyl, ethyl, propyl, and isopropyl groups, and $R_3$ can be chosen from hydrogen and chlorine. Non-limiting examples of amine-containing curing agents for use in the present invention include the following compounds, manufactured by Lonza Ltd. (Basel, Switzerland):

LONZACURE.RTM. M-DIPA: $R_1$=$C_3$ $H_7$; $R_2$=$C_3$ $H_7$; $R_3$=H
LONZACURE.RTM. M-DMA: $R_1$=$CH_3$; $R_2$=$CH_3$; $R_3$=H
LONZACURE.RTM. M-MEA: $R_1$=$CH_3$; $R_2$=$C_2$ $H_5$; $R_3$=H
LONZACURE.RTM. M-DEA: $R_1$=$C_2$ $H_5$; $R_2$=$C_2$ $H_5$; $R_3$=H
LONZACURE.RTM. M-MIPA: $R_1$=$CH_3$; $R_2$=$C_3$ $H_7$; $R_3$=H
LONZACURE.RTM. M-CDEA: $R_1$=$C_2$ $H_5$; $R_2$=$C_2$ $H_5$; $R_3$=Cl

wherein $R_1$, $R_2$ and $R_3$ correspond to the aforementioned chemical formula.

In a non-limiting embodiment, the amine-containing curing agent can include but is not limited to a diamine curing agent such as 4,4'-methylenebis(3-chloro-2,6-diethylaniline), (Lonzacure.RTM. M-CDEA), which is available in the United States from Air Products and Chemical, Inc. (Allentown, Pa.). In alternate non-limiting embodiments, the amine-containing curing agent for use in the present invention can include 2,4-diamino-3,5-diethyl-toluene, 2,6-diamino-3,5-diethyl-toluene and mixtures thereof (collectively "diethyltoluenediamine" or "DETDA"), which is commercially available from Albemarle Corporation under the trade name Ethacure 100; dimethylthiotoluenediamine (DMTDA) , which is commercially available from Albemarle Corporation under the trade name Ethacure 300; 4,4'-methylene-bis-(2-chloroaniline) which is commercially available from Kingyorker Chemicals under the trade name MOCA. DETDA can be a liquid at room temperature with a viscosity of 156 cPs at 25°C. DETDA can be isomeric, with the 2,4-isomer range being from 75 to 81 percent while the 2,6-isomer range can be from 18 to 24 percent.

In a non-limiting embodiment, the color stabilized version of Ethacure 100 (i.e., formulation which contains an additive to reduce yellow color), which is available under the name Ethacure 100S may be used in the present invention.

In a non-limiting embodiment, the amine-containing curing agent can act as a catalyst in the polymerization reaction and can be incorporated into the resulting polymerizate.

Non-limiting examples of the amine-containing curing agent can include ethyleneamines. Suitable ethyleneamines can include but are not limited to ethylenediamine (EDA), diethylenetriamine (DETA), triethylenetetramine (TETA), tetraethylenepentamine (TEPA), pentaethylenehexamine (PEHA), piperazine, morpholine, substituted morpholine, piperidine, substituted piperidine, diethylenediamine (DEDA), and 2-amino-1-ethylpiperazine. In alternative non-limiting embodiments, the amine-containing curing agent can be chosen from one or more isomers of $C_1$-$C_3$ dialkyl toluenediamine, such as but not limited to 3,5-dimethyl-2,4-toluenediamine, 3,5-dimethyl-2,6-toluenediamine, 3,5-diethyl-2,4-toluenediamine, 3,5-diethyl-2,6-toluenediamine, 3,5-diisopropyl-2,4-toluenediamine, 3,5-diisopropyl-2,6-toluenediamine, and mixtures thereof. In alternative non-limiting embodiments, the amine-containing curing agent can be methylene dianiline or trimethyleneglycol di(para-aminobenzoate).

In alternate non-limiting embodiments of the present invention, the amine-containing curing agent can include one of the following general structures (XIII-XV):

(XIII) 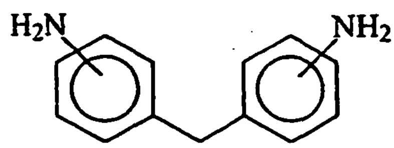

(XIV) 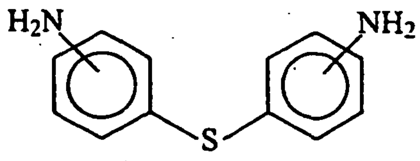

(XV) 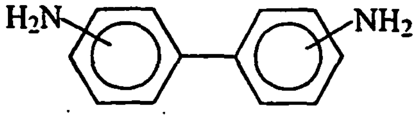

In further alternative non-limiting embodiments, the amine-containing curing agent can include one or more methylene bis anilines which can be represented by the general formulas XVI-XX, one or more aniline sulfides which can be represented by the general formulas XXI-XXV, and/or one or more bianilines which can be represented by the general formulas XXVI-XXVIX,

(XVI) 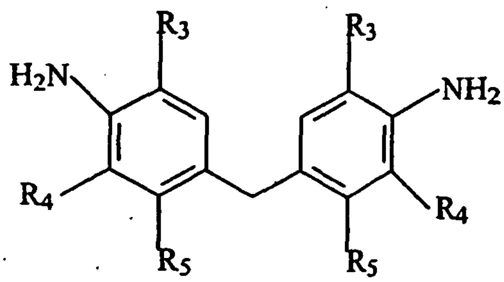

(XVII) 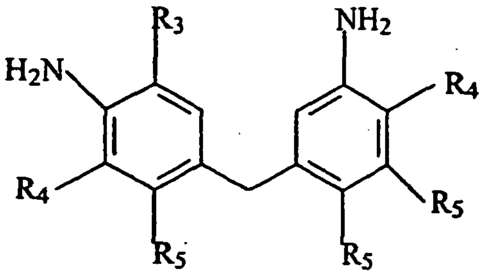

(XVIII) 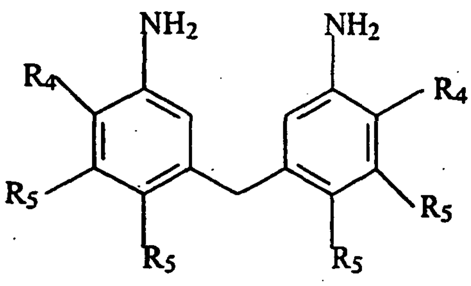

(XIX)

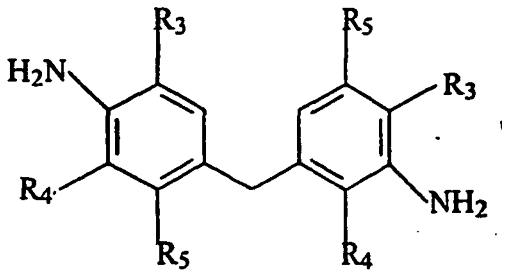

(XX)

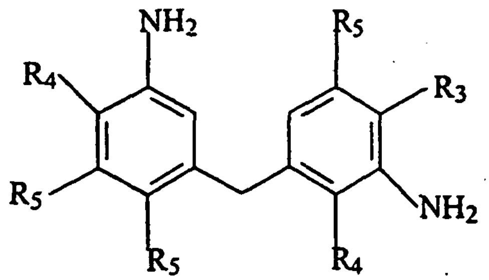

(XXI)

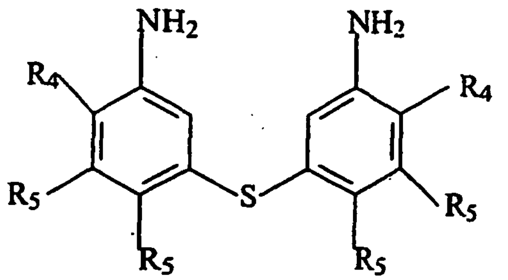

(XXII)

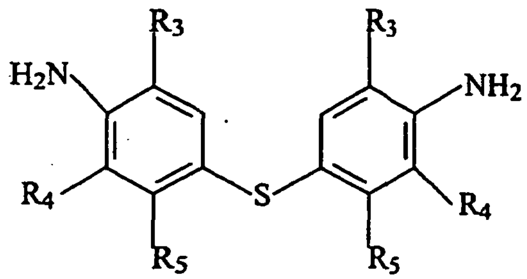

(XXIII)

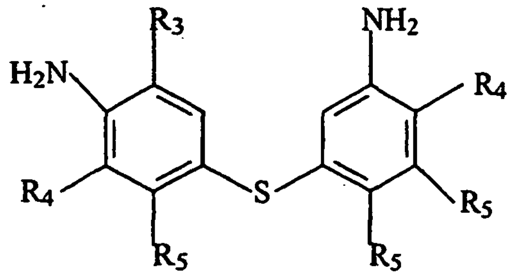

(XXIV)

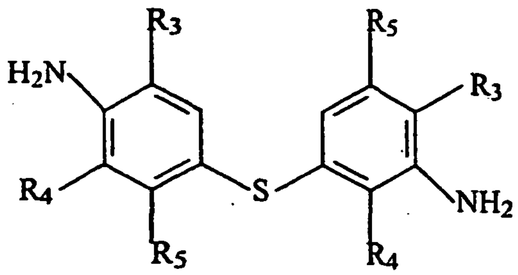

(XXV)

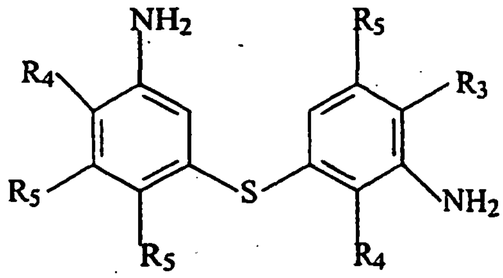

(XXVI)

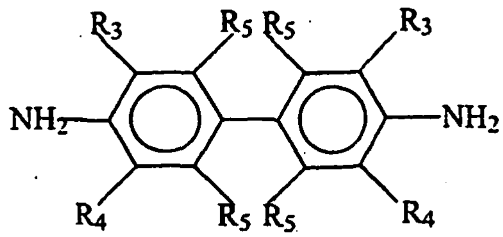

(XXVII)

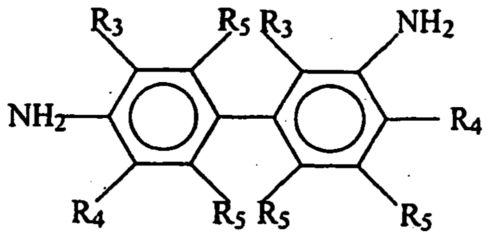

(XXVIII)

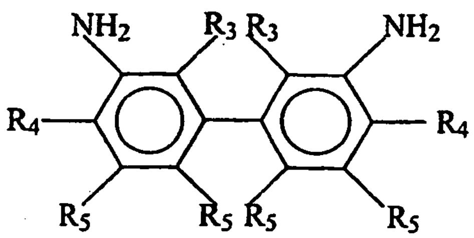

(XXIX) 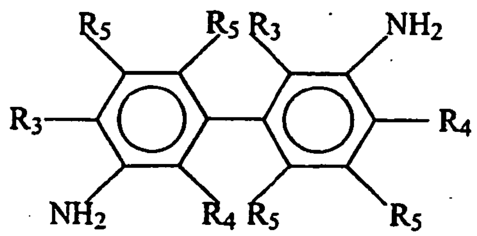

wherein $R_3$ and $R_4$ can each independently represent $C_1$-$C_3$ alkyl, and $R_5$ can be chosen from hydrogen and halogen, such as but not limited to chlorine and bromine. The diamine represented by general formula XV can be described generally as a 4,4'-methylene-bis(dialkylaniline). Suitable non-limiting examples of diamines which can be represented by general formula XV include but are not limited to 4,4'-methylene-bis(2,6-dimethylaniline), 4,4'-methylene-bis(2,6-diethylaniline), 4,4'-methylene-bis(2-ethyl-6-methylaniline), 4,4'-methylene-bis(2,6-diisopropylaniline), 4,4'-methylene-bis(2-isopropyl-6-methylaniline) and 4,4'-methylene-bis(2,6-diethyl-3-chloroaniline).

In a further non-limiting embodiment, the amine-containing curing agent can include materials which can be represented by the following general structure (XXX):

(XXX) 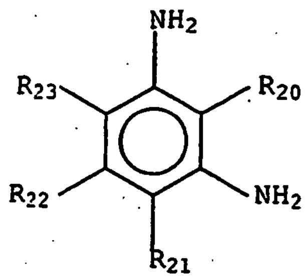

where $R_{20}$, $R_{21}$, $R_{22}$, and $R_{23}$ can be independently chosen from H, $C_1$-$C_3$ alkyl, $CH_3$-S- and halogen, such as but not limited to chlorine or bromine. In a non-limiting embodiment of the present invention, the amine-containing curing agent which can be represented by general formula XXX can include diethyl toluene diamine (DETDA) wherein $R_{23}$ is methyl, $R_{20}$ and $R_{21}$ are each ethyl and $R_{22}$ is hydrogen. In a further non-limiting embodiment, the amine-containing curing agent can include 4,4'-methylenedianiline.

In a non-limiting embodiment, the sulfur-containing polyureaurethane of the present invention can include a polythiol material. In a further non-limiting embodiment, the polythiol material can have at least two thiol groups. Suitable polythiol materials include but are not limited to those described previously.

In a non-limiting embodiment, the sulfur-containing polyureaurethane can be polymerized by degassing the prepolymer under vacuum, and degassing the amine-containing curing agent and the optional polythiol under vacuum. The amine-containing curing agent and the optional polythiol can then be mixed with the prepolymer using, for example, an impeller or extruder. The resultant reaction mixture can be added to a mold and then the mold can be heated. The thermal cure cycle can vary depending on, for example, the reactivity and molar ratio of the reactants and the presence of any catalyst(s). In a non-limiting embodiment, the thermal cure cycle can include heating the prepolymer, curing agent, and optional polythiol mixture from room temperature to 200°C over a period of from 0.5 hours to 72 hours.

Suitable urethane-forming catalysts can be used in the present invention to enhance the reaction of the polyurethane-forming materials. Suitable urethane-forming catalysts can be those catalysts that are specific for the formation of urethane by reaction of the NCO and OH-containing materials, and which have little tendency to accelerate side reactions leading to allophonate and isocyanate formation. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. In a non-limiting embodiment, the catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, 1,4-diazabicyclo[2.2.2]octane, and mixtures thereof. In alternate non-limiting embodiments, the catalyst can be zinc octoate, bismuth, or ferric acetylacetonate.

Further non-limiting examples of suitable catalysts can include tertiary amines such as but not limited to triethylamine, triisopropylamine and N,N-dimethylbenzylamine. Such suitable tertiary amines are disclosed in United States Patent 5,693,738 at column 10, lines 6-38.

In a non-limiting embodiment, the catalyst can be incorporated into the amine-containing curing agent. The

amount of catalyst can vary widely depending on the particular catalyst chosen. In alternative non-limiting embodiments, the amount of catalyst can be less than 5% by weight, or less than 3% by weight, or less than 1% by weight, based on the total weight of the reaction mixture. For example, dibutyltin dilaurate can be employed in amounts of from 0.0005 to 0.02 parts per 100 parts of the polyurethane-forming materials. The amount of catalyst used can be dependent on the curing temperature employed.

In a non-limiting embodiment of the present invention, a catalyst can be used. Non-limiting examples of suitable catalysts can include phosphines, tertiary ammonium salts and tertiary amines, such as but not limited to triethylamine; triisopropylamine and N,N-dimethylbenzylamine. Additional non-limiting examples of suitable tertiary amines are disclosed in United States Patent 5,693,738 at column 10 lines 6 through 38.

In a non-limiting embodiment, the catalyst can be incorporated into the amine-containing curing agent or the amine-containing curing agent and polythiol mixture prior to mixing with the prepolymer. The amount of catalyst can vary widely depending on the particular catalyst chosen. In alternative non-limiting embodiments, the amount of catalyst can be less than 5 % by weight, or less than 3 % by weight, or less than 1 % by weight, based on the total weight of the reaction mixture.

In alternate non-limiting embodiments, the sulfur-containing polyureaurethane of the present invention can have a molar equivalent ratio of ($-NH_2$ + -NH- + -OH + SH) to (NCO + NCS) of at least 0.4:1, or at least 0.8:1, or 1.0:1, or 2:0:1.0 or less.

In alternate non-limiting embodiments, the episulfide-containing material can be present in an amount such that the ratio of episulfide to (NCO + OH + SH) can be at least 0.75:1, or 1:1, or at least 1.3:1.0, or 4.0:1.0 or less, or 6.0:1.0 or less.

In a non-limiting embodiment, the polyureaurethane prepolymer can be the reaction product of DEDTA and a poly(caprolactone) diol having the general formula XXXI:

(XXXI) $HO\text{-}[\text{-}(CH_2)_5\text{-}C(O)\text{-}O\text{-}]_t\text{-}(CH_2)_5\text{-}OH$

where t is an integer from 1 to 10; and 4,4'-diisocyanatocyclohexyl methane, or a polyol of the general formula XXXII:

In a non-limiting embodiment, the polyether-containing polyol can comprise block polymers including blocks of ethylene oxide-propylene oxide and/or ethylene oxide-butylene oxide. In a non-limiting embodiment, the polyether-containing polyol can comprise a block polymer of the following chemical formula:

$$H\text{-}(O\text{-}CRRCRR\text{-}Y_n)_a\text{-}(CRRCRR\text{-}Y_n\text{-}O)_b\text{-}(CRRCRR\text{-}Y_n\text{-}O)_c\text{-}H$$

wherein R can represent hydrogen or $C_1$-$C_6$ alkyl; Y can represent $CH_2$; n can be an integer from 0 to 6; a, b, and c can each be an integer from 0 to 300, wherein a, b and c are chosen such that the weight average molecular weight of the polyol does not exceed 32,000.

In this non-limiting embodiment, the polyureaurethane prepolymer can be reacted with an episulfide-containing material of the formula XXXIII:

(XXXII) 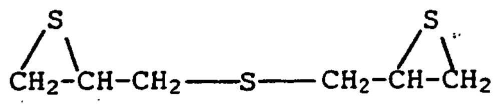

In alternative non-limiting embodiments, various known additives can be incorporated into the sulfur-containing polyureaurethane of the present invention. Such additives can include but are not limited to light stabilizers, heat stabilizers, antioxidants, ultraviolet light absorbers, mold release agents, static (non-photochromic) dyes, pigments and flexibilizing additives, such as but not limited to alkoxylated phenol benzoates and poly(alkylene glycol) dibenzoates. Non-limiting examples of anti-yellowing additives can include 3-methyl-2-butenol, organo pyrocarbonates and triphenyl phosphite (CAS registry no. 101-02-0). Such additives can be present in an amount such that the additive constitutes less than 10 percent by weight, or less than 5 percent by weight, or less than 3 percent by weight, based on the total weight of the prepolymer. In alternative non-limiting embodiments, the aforementioned optional additives can be mixed with the polycyanate. In a further embodiment, the optional additives can be mixed with hydrogen-containing material.

In a non-limiting embodiment, the resulting sulfur-containing polyureaurethane of the present invention can be solid, and essentially transparent such that it is suitable for optical or ophthalmic applications. In alternative non-limiting embodiments, the sulfur-containing polyureaurethane can have a refractive index of at least 1.57, or at least 1.58, or at least 1.60, or at least 1.62. In further alternative non-limiting embodiments, the sulfur-containing polyureaurethane can have an Abbe number of at least 35, or at least 38, or at least 39, or at least 40, or at least 41.

The sulfur-containing polyureaurethane of the present invention when used to prepare a polymerizate, can have good impact resistance/strength. In a non-limiting embodiment, the impact strength can be at least 2.0 joules, or at least 4.95 joules as measured by an Impact Energy Test. The Impact Energy Test consists of testing a flat sheet of polymerizate having a thickness of 3mm, by dropping various balls of increasing weight from a distance of 50 inches (1.25 meters) onto the center of the sheet. If the sheet is determined to have failed the test when the sheet fractures. As used herein, the term "fracture" refers to a crack through the entire thickness of the sheet into two or more separate pieces, or detachment from the inner surface of any sheet material visible to the naked eye.

Further, the sulfur-containing polyureaurethane of the present invention can have a low density. In a non-limiting embodiment, the density can be from greater than 1.0 to less than 1.25 grams/$cm^3$, or from greater than 1.0 to less than 1.3 grams/$cm^3$. In a non-limiting embodiment, the density is measured using a DensiTECH instrument manufactured by Tech Pro, Incorporated. In a further non-limiting embodiment, the density is measured in accordance with ASTM D297.

Solid articles that can be prepared using the sulfur-containing polyureaurethane of the present invention include but are not limited to optical lenses, such as plano and ophthalmic lenses, sun lenses, windows, automotive transparencies, such as windshields, sidelights and backlights, and aircraft transparencies.

When used to prepare photochromic articles, such as lenses, the polymerizate should be transparent to that portion of the electromagnetic spectrum which activates the photochromic substance(s) incorporated in the matrix, i.e., that wavelength of ultraviolet (UV) light that produces the colored or open form of the photochromic substance and that portion of the visible spectrum that includes the absorption maximum wavelength of the photochromic substance in its UV activated form, i.e., the open form. Photochromic substances that may be utilized with the polymerizates of the present invention are organic photochromic compounds or substances containing same that may be incorporated, e.g., dissolved, dispersed or diffused into such polymerizates.

A first group of organic photochromic substances contemplated for use to form the photochromic articles of the present invention are those having an activated absorption maximum within the visible range of greater than 590 nanometers, e.g., between greater than 590 to 700 nanometers. These materials typically exhibit a blue, bluish-green, or bluish-purple color when exposed to ultraviolet light in an appropriate solvent or matrix. Examples of classes of such substances that are useful in the present invention include, but are not limited to, spiro(indoline)naphthoxazines and spiro(indoline)benzoxazines. These and other classes of such photochromic substances are described in the open literature. See for example, U.S. Patents: 3,562,172; 3,578,602; 4,215,010; 4,342,668; 5,405,958; 4,637,698; 4,931,219; 4,816,584; 4,880,667; 4,818,096.

A second group of organic photochromic substances contemplated for use to form the photochromic articles of the present invention are those having at least one absorption maximum and preferably two absorption maxima, within the visible range of between 400 and less than 500 nanometers. These materials typically exhibit a yellow-orange color when exposed to ultraviolet light in an appropriate solvent or matrix. Such compounds include certain chromenes, i.e., benzopyrans and naphthopyrans. Many of such chromenes are described in the open literature, e.g., U.S. Patents 3,567,605; 4,826,977; 5,066,818; 4,826,977; 5,066,818; 5,466,398; 5,384,077; 5,238,931; and 5,274,132.

A third group of organic photochromic substances contemplated for use to form the photochromic articles of the present invention are those having an absorption maximum within the visible range of between 400 to 500 nanometers and another absorption maximum within the visible range of between 500 to 700 nanometers. These materials typically exhibit color(s) ranging from yellow/brown to purple/gray when exposed to ultraviolet light in an appropriate solvent or matrix. Examples of these substances include certain benzopyran compounds, having substituents at the 2-position of the pyran ring and a substituted or unsubstituted heterocyclic ring, such as a benzothieno or benzofurano ring fused to the benzene portion of the benzopyran. Such materials are the subject of U.S. Patent No. 5,429,774.

Other photochromic substances contemplated are photochromic organo-metal dithizonates, i.e., (arylazo)-thioformic arylhydrazidates, e.g., mercury dithizonates which are described in, for example, U.S. Patent 3,361,706. Fulgides and fulgimides, e.g. the 3-furyl and 3-thienyl fulgides and fulgimides which are described in U.S. Patent 4,931,220 at column 20, line 5 through column 21, line 38.

The photochromic articles of the present invention may contain one photochromic substance or a mixture of photochromic substances, as desired. Mixtures of photochromic substances may be used to attain certain activated colors such as a near neutral gray or brown.

Each of the photochromic substances described herein may be used in amounts and in a ratio (when mixtures are used) such that a polymerizate to which the mixture of compounds is applied or in which they are incorporated exhibits a desired resultant color, e.g., a substantially neutral color such as shades of gray or brown when activated with unfiltered sunlight, i.e., as near a neutral color as possible given the colors of the activated photochromic substances. The relative amounts of the aforesaid photochromic substances used will vary and depend in part upon the relative intensities of the color of the activated species of such compounds, and the ultimate color desired.

The photochromic compounds or substances described herein may be applied to or incorporated into the polymerizate by various methods described in the art. Such methods include dissolving or dispersing the substance within the polymerizate, e.g., imbibition of the photochromic substance into the polymerizate by immersion of the polymerizate in a hot solution of the photochromic substance or by thermal transfer; providing the photochromic substance as a separate layer between adjacent layers of the polymerizate, e.g., as a part of a polymer film; and applying the photochromic substance as a coating or as part of a coating placed on the surface of the polymerizate. The term "imbibition" or "imbibe" is intended to mean and include permeation of the photochromic substance alone into the polymerizate, solvent assisted transfer absorption of the photochromic substance into a porous polymer, vapor phase transfer, and other such transfer mechanisms. One example of an imbibing method includes the steps of coating the photochromic article with the photochromic substance; heating the surface of the photochromic article; followed by removing the residual coating from the surface of the photochromic article.

The amount of photochromic substance or composition containing the same applied to or incorporated into the polymerizate is not critical provided that a sufficient amount is used to produce a photochromic effect discernible to the naked eye upon activation. Generally such amount can be described as a photochromic amount. The particular amount used depends often upon the intensity of color desired upon irradiation thereof and upon the method used to incorporate or apply the photochromic substances. Typically, the more photochromic substance applied or incorporated, the greater is the color intensity. Generally, the amount of total photochromic substance incorporated into or applied to a photochromic optical polymerizate may range from 0.15 to 0.35 milligrams per square centimeter of surface to which the photochromic substance(s) is incorporated or applied.

It is also contemplated that photochromic substances may be added to the multi-component organic composition prior to polymerizing, e.g., cast curing, the composition. However, when this is done it is preferred that the photochromic substance(s) be resistant to potentially adverse interactions with, for example, initiator(s) that may be present and / or the isocyanate, isothiocyante and amine groups of the first and second components. These adverse interactions can result in deactivation of the photochromic substance(s), e.g., by trapping them in either an open or closed form. Photochromic substances can also include photochromic pigments and organic photochromic substances encapsulated in metal oxides, the latter of which are described in U.S. Patents 4,166,043 and 4,367,170. Organic photochromic substances sufficiently encapsulated within a matrix of an organic polymerizate, as described in U.S. Patent 4,931,220, may also be incorporated into the multi-component composition of the present invention prior to curing. If photochromic substances are added to the multi-component organic composition of the present invention prior to curing, they are typically incorporated into the second component prior to mixing the first and second components together.

EXAMPLES

**Example 1- Preparation of reactive polycyanate prepolymer 1 (RP1)**

In a reaction vessel equipped with a paddle blade type stirrer, thermometer, gas inlet, and addition funnel, 11721 grams (89.30 equivalents of NCO) of Desmodur W obtained from Bayer Corporation, 5000 grams (24.82 equivalents of OH) of a 400 MW polycaprolactone diol (CAPA 2047A obtained from Solvay), 1195 grams (3.22 equivalents of OH) of 750 MW polycaprolactone diol (CAPA 2077A obtained from Solvay), and 217.4 grams (4.78 equivalents of OH) of trimethylol propane (TMP) obtained from Aldrich were charged. Desmodur W was obtained from Bayer Corporation and represents 4,4'-methylenebis(cyclohexyl isocyanate) containing 20% of the trans,trans isomer and 80% of the cis, cis and cis, trans isomers. The contents of the reactor were stirred at a rate of 150 rpm and a nitrogen blanket was applied as the reactor contents were heated to a temperature of 120°C at which time the reaction mixture began to exotherm. The heat was removed and the temperature rose to a peak of 140°C for 30 minutes then began to cool. Heat was applied to the reactor when the temperature reached 120°C and was maintained at that temperature for 4 hours. The reaction mixture was sampled and analyzed for % NCO, according to the method described below in the embodiment. The analytical result showed about 13.1.% free NCO groups. Before pouring out the contents of the reactor, 45.3 g of Irganox 1010 (obtained from Ciba Specialty Chemicals), a thermal stabilizer and 362.7 g of Cyacorb 5411 (obtained from Cytek), a UV stabilizer were mixed into the prepolymer.

The NCO concentration of the prepolymer was determined using the following titrimetric procedure in accordance with ASTM-D-2572-91. The titrimetric method consisted of adding a 2 gram sample of Component A to an Erlenmeyer flask. This sample was purged with nitrogen and several glass beads (5mm) were then added. To this mixture was added 20 mL of IN dibutylamine (in toluene) with a pipet. The mixture was swirled and capped. The flask.was then placed on a heating source and the flask was heated to slight reflux, held for 15 minutes at this temperature and then cooled to room temperature. Note, a piece of Teflon was placed between the stopper and joint to prevent pressure buildup while heating. During the heating cycle, the contents were frequently swirled in an attempt for complete solution and reaction. Blank values were obtained and determined by the direct titration of 20 mL of pipeted IN dibutylamine (DBA) plus 50 mL of methanol with 1N hydrochloric acid (HCl) using the Titrino 751 dynamic autotitrator. Once the average values for the HCl normalities and DBA blanks were calculated, the values were programmed into the autotitrator. After the sample had cooled, the contents were transferred into a beaker with approximately 50-60 mL of methanol. A magnetic stirring bar was added and the sample titrated with IN HCl using the preprogrammed Titrino 751 autotitrator.

The percent NCO and IEW (isocyanate equivalent weight) were calculated automatically in accordance with the following formulas:

%NCO=(mLs blank-mLs sample)(Normality HCl)(4.2018)/sample wt., grams

IEW=(sample wt., grams)1000/(mLs blank-mLs sample)(Normality HCl).

The "Normality HCl" value was determined as follows. To a pre-weighed beaker was added 0.4 grams of $Na_2CO_3$ primary standard and the weight was recorded. To this was added 50 mL of deionized water and the $Na_2CO_3$ was dissolved with magnetic stirring. An autotitrator (i.e., Metrohm GPD Titrino 751 dynamic autotitrator with 50 mL buret) equipped with a combination pH electrode (i.e., Metrohm combination glass electrode No. 6.0222.100), was used to titrate the primary standard with the IN HCl and the volume was recorded. This procedure was repeated two additional times for a total of three titrations and the average was used as the normality according to the following formula:

Normality HCl=standard wt., grams/(mLs HCl)(0.053)

**Example 2- Reparation of reactive polycyanate prepolymer 2 (RP2)**

In a reactor vessel containing a nitrogen blanket, 450 grams of 400 MW polycaprolactone, 109 grams of 750 MW polycaprolactone, 114.4 grams of trimethylol propane, 3000 grams of Pluronic L62D, and 2698 grams of Desmodur W, were mixed together at room temperature to obtain NCO/OH equivalent ratio of 2.86. Desmodur W was obtained from Bayer Corporation and represents 4,4'-methylenebis(cyclohexyl isocyanate) containing 20% of the trans, trans isomer and 80% of the cis,cis and cis, trans isomers. Pluronic L62D is a polyethylene oxide-polypropylene oxide block polyether diol and was obtained from BASF. The reaction mixture was heated to a temperature of 65oC at which point 30 ppm of dibutyltindilaurate catalyst, from Aldrich, was added and theat was removed. The resulting exotherm raised the temperature of the mixture to 112oC. The reaction was then allowed to cool to a temperature of about 100□C, and 131 grams of UV absorber Cyasorb 5411 (obtained from American Cyanamid/Cytec) and 32.66 grams of Irganox 1010 (obtained from Ciba Geigy) were added with 0.98 grams of one weight percent Exalite Blue 78-13 (obtained from Exciton). The mixture was stirred for an additional two hours at 100oC and then allowed to cool to room temperature. The isocyanate (NCO) concentration of the prepolymer determined, using the procedure described above (see Example 1) was 8.7%.

**Examples 3- Preparation of reactive polycyanate prepolymer 3 (RP3)**

In a reactor vessel containing a nitrogen blanket, 450 grams of 400 MW polycaprolactone, 109 grams of 750 MW polycaprolactone, 114.4 grams of trimethylol propane, 3000 grams of Pluronic L62D, and 3500 grams of Desmodur W, were mixed together at room temperature to obtain NCO/OH equivalent ratio of 3.50. Desmodur W was obtained from Bayer Corporation and represents 4,4.'-methylenebis(cyclohexyl isocyanate) containing 20% of the trans,trans isomer and 80% of the cis,cis and cis, trans isomers. Pluronic L62D is a polyethylene oxide-polypropylene oxide block polyether diol and was obtained from BASF. The reaction mixture was heated to a temperature of 65oC at which point 30 ppm of dibutyltindilaurate catalyst, from Aldrich, was added and theat was removed. The resulting exotherm raised the temperature of the mixture to 112oC. The reaction was then allowed to cool to a temperature of about 100oC, and 131 grams of UV absorber Cyasorb 5411 (obtained from American Cyanamid/Cytec) and 32.66 grams of Irganox 1010 (obtained from Ciba Geigy) were added with 0.98 grams of one weight percent Exalite Blue 78-13 (obtained from Exciton). The mixture was stirred for an additional two hours at 100oC and then allowed to cool to room temperature. The isocyanate (NCO) concentration of the prepolymer, determined using the procedure described above (see Example 1), was 10.8%.

**Example 4- Preparation of reactive polycyanate prepolymer 4 (RP4)**

In a reactor vessel containing a nitrogen blanket, 508 grams of 400 MW polycaprolactone, 114.4 grams of trimethylol propane, 3000 grams of Pluronic L62D, and 4140 grams of Desmodur W, were mixed together at room

temperature to obtain NCO/OH equivalent ratio of 4.10. Desmodur W was obtained from Bayer Corporation and represents 4,4'-methylenebis(cyclohexyl isocyanate) containing 20% of the trans,trans isomer and 80% of the cis,cis and cis, trans isomers. Pluronic L62D is a polyethylene oxide-polypropylene oxide block polyether diol and was obtained from BASF. The reaction mixture was heated to a temperature of 65°C at which point 30 ppm of dibutyltindilaurate catalyst, from Aldrich, was added and the heat was removed. The resulting exotherm raised the temperature of the mixture to 112oC. The reaction was then allowed to cool to a temperature of about 100°C, and 150 grams of UV absorber Cyasorb 5411 (obtained from American Cyanamid/Cytec) and 37.5 grams of Irganox 1010 (obtained from Ciba Geigy) were added with 1.13 grams of one weight percent Exalite Blue 78-13 (obtained from Exciton). The mixture was stirred for an additional two hours at 100oC and then allowed to cool to room temperature. The isocyanate (NCO) concentration of the prepolymer, determined using the procedure described above (see Example 1), was 12.2%.

## EXAMPLE 5

30.0 g of RP1 and 10.0 g of bis-epithiopropyl sulfide (formula XXXI) were mixed by stirring at 50°C until a homogeneous mixture was obtained. 4.00 g of PTMA, 2.67g of DETDA and 5.94 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

## EXAMPLE 6

24.0 g of RP1 and 20.0 g of bis-epithiopropyl sulfide (formula XXXI) were mixed by stirring at 50°C until a homogeneous mixture was obtained. 2.00 g of DMDS, 2.14g of DETDA, 4.75 g of MDA and 0.12 g Irganox 1010 (obtained from Ciba Specialty Chemicals) were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact resistence given in Table 1.

## EXAMPLE 7

30.0 g of RP1 and 20.0 g of bis-epithiopropyl sulfide (formula XXXI) were mixed by stirring at 50°C until a homogeneous mixture was obtained. 2.40 g of PTMA, 5.34g of DETDA and 3.96 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

## EXAMPLE 8

24.0 g of RP1 and 20.0 g of bis-epithiopropyl sulfide (formula XXXI) were mixed by stirring at 50°C until a homogeneous mixture was obtained. 2.85g of DETDA and 3.96 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

## EXAMPLE 9

30.0 g of RP3 and 25.0 g of bis-epithiopropyl sulfide (formula XXXI) were mixed by stirring at 50°C until a homogeneous mixture was obtained. 3.75 g of DMDS, 2.45g of DETDA and 4.66 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

**EXAMPLE 10**

30.0 g of RP4 and 25.0 g of bis-epithiopropyl sulfide (formula XXXI) were mixed by stirring at 50°C until a homogeneous mixture was obtained. 3.75 g of DMDS, 2.71g of DETDA and 5.17 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

**EXAMPLE 11**

30.0 g of RP2 and 21.4.0 g of bis-epithiopropyl sulfide (formula XXXI) were mixed by stirring at 50°C until a homogeneous mixture was obtained. 3.21 g of DMDS, 1.92 g of DETDA and 3.67 g of MDA were mixed by stirring at 50°C until homogeneous mixture was obtained. Both mixtures then were degassed under vacuum at 50°C. Then they were mixed at this temperature and homogenized by gentle stirring for 1-2 minutes. The resulting clear mixture was immediately charged between two flat glass molds. The molds were heated at 130°C for 5 hours, yielding a transparent plastic sheet with refractive index (e-line), Abbe number, density and impact given in Table 1.

**Table 1.**

| Experiment # | Refractive Index (e-line) | Abbe Number | Density ($g/cm^3$) | Impact Energy (J) |
|---|---|---|---|---|
| 5 | 1.58 | 38 | 1.195 | 3.99 |
| 6 | 1.61 | 36 | 1.231 | 2.13 |
| 7 | 1.59 | 38 | 1.217 | 2.47 |
| 8 | 1.60 | 37 | 1.222 | 2.77 |
| 9 | 1.60 | 38 | 1.227 | >4.95 |
| 10 | 1.59 | 37 | 1.211 | 3.56 |
| 11 | 1.59 | 38 | 1.218 | >4.95 |

The invention has been described with reference to non-limiting embodiments. Obvious modifications and alterations can occur to others upon reading and understanding the detailed description. It is intended that the invention be construed as including all such modifications and alterations insofar as they come within the scope of the appended claims or the equivalents thereof.

## Claims

1. A sulfur-containing polyureaurethane when at least partially cured having a refractive index of at least 1.57, an Abbe number of at least 35 and a density of less than 1.3 grams/$cm^3$.

2. The sulfur-containing polyureaurethane of claim 1 further comprising an impact strength of at least 2 joules.

3. The sulfur-containing polyureaurethane of any of claims 1 and 2 comprising the reaction product of:

   (a) a prepolymer obtained from a polyiso(thio)cyanate and at least one hydrogen-containing material chosen from an OH-containing material, a SH-containing material and mixtures thereof;
   (b) at least one episulfide-containing material; and
   (c) an amine-containing curing agent.

4. The sulfur-containing polyureaurethane of claim 3 wherein said polyiso(thio)cyanate is chosen from polyisocyanate, polyisothiocyanate and mixtures thereof.

5. The sulfur-containing polyureaurethane of claim 4 wherein said polyiso(thio)cyanate is chosen from aliphatic polyisocyanates, cycloaliphatic polyisocyanates, aromatic polyisocyanates, and mixtures thereof.

**6.** The sulfur-containing polyureaurethane of claim 5 wherein said polyiso(thio)cyanate is chosen from aliphatic diisocyanates, cycloaliphatic diisocyanates, aromatic diisocyanates, cyclic dimers and cyclic trimers thereof, and mixtures thereof.

**7.** The sulfur-containing polyureaurethane of claim 5 wherein said polyiso(thio)cyanate comprises dicyclohexylmethane diisocyanate and isomeric mixtures thereof.

**8.** The sulfur-containing polyureaurethane of claim 5 wherein said polyiso(thio)cyanate is chosen from trans, trans isomer of 4,4'-methylenebis(cyclohexyl isocyanate).

**9.** The sulfur-containing polyureaurethane of claim 5 wherein said polyiso(thio)cyanate is chosen from 3-isocyanatomethyl-3,5,5-trimethyl cyclohexyl-isocyanate, meta-tetramethylxylene diisocyanate (1,3-bis(1-isocyanato-1-methylethyl)-benzene) and mixtures thereof.

**10.** The sulfur-containing polyureaurethane of any of claims 3-9 wherein said hydrogen-containing material is chosen from polyols, polythiols, and materials having both hydroxyl and thiol functional groups.

**11.** The sulfur-containing polyureaurethane of claim 10 wherein said hydrogen-containing material is chosen from polyester polyols, polycaprolactone polyole, polyether polyols, polycarbonate polyols, and mixtures thereof.

**12.** The sulfur-containing polyureaurethane of claim 3 wherein said hydrogen-containing material has a weight average molecular weight of from 200 to 32,000.

**13.** The sulfur-containing polyureaurethane of claim 12 wherein said hydrogen-containing material has a weight average molecular weight of from about 2,000 to 15,000.

**14.** The sulfur-containing polyureaurethane of claim 3 wherein said hydrogen-containing material comprises block moieties derived from a polyether polyol.

**15.** The sulfur-containing polyureaurethane of claim 14 wherein said polyether polyol comprises the following formula :

$$H\text{-}(O\text{-}CRRCRR\text{-}Y_n)_a\text{-}(CRRCRR\text{-}Y_a\text{-}O)_b\text{-}(CRRCRR\text{-}Y_n\text{-}O)_c\text{-}H$$

wherein R can represent hydrogen or $C_1$-$C_6$ alkyl, Y can represent $CH_2$; n can be an integer from 0 to 6, a, b, aad c can each be an integer from 0 to 300, wherein a, b and c are chosen such that the weight average molecular weight of the polyol does not exceed 32,000.

**16.** The sulfur-containing polyureaurethane of claim 10 wherein said polythiol is chosen from aliphatic polythiols, cycloaliphatic polythiols, aromatic polythiols, polymeric polythiols, polythiols containing ether linkages, polythiols containing sulfide linkages, polythiols containing polysulfide linkages.

**17.** The sulfur-containing polyureaurethane of claim 3 wherein said prepolymer has a NCO/OH equivalent ratio of from 2.0 to less than 4.5.

**18.** The sulfur-containing polyureaurethane of any of claims 3-17 wherein at least one of said episulfide-containing material contains the following moiety:

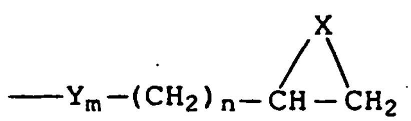

wherein X is selected from S and O, and Y is selected from $C_1$-$C_{10}$-alkyl, O and S, m is an integer from 0 to 2 and n is an integer from 0 to 10.

**19.** The sulfur-containing polyureaurethane of any of claims 3-18 wherein said amine-containing curing agent is chosen from materials having the following chemical formula and mixtures thereof:

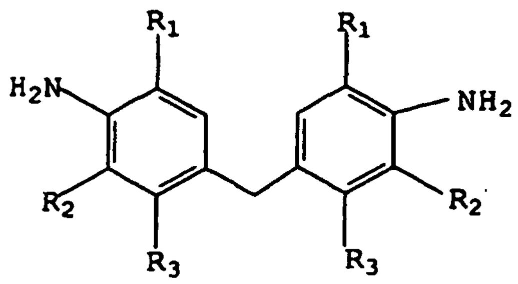

wherein $R_1$ and $R_2$ are each independently chosen from methyl, ethyl, propyl, and isopropyl groups, and $R_3$ is chosen from hydrogen and chlorine.

**20.** The sulfur-containing polyureaurethane of claim 19 wherein said amine-containing curing agent is 4,4'-methylenebis (3-chloro-2,6-diethylaniline).

**21.** The sulfur-containing polyureaurethane of any of claims 3-18 wherein said amine-containing curing agent is chosen from 2,4-diamino-3,5-diethyl-toluene, 2,6-diamino-3,5-diethyl-toluene and mixtures thereof.

**22.** The sulfur-containing polyureaurethane of claim 3 wherein said amine-containing curing agent is present in a $NCO/NH_2$ equivalent ratio of from 1.0 NCO/0.60 $NH_2$ to 1.0 NCO/1.20 $NH_2$.

**23.** A method of preparing a sulfur-containing polyureaurethane comprising the steps of:

(a) obtaining prepolymer by reacting a polyiso(thio)cyanate and at least one hydrogen-containing material chosen from polyols, polythiols, and materials having both hydroxyl and thiol functional groups;
(b) reacting said prepolymer with at least one episulfide-containing material; and
(c) reacting mixture from step (b) with an amine-containing curing agent

wherein when at least partially cured having a refractive index of at least 1.57, an Abbe number of at least 35 and a density of less than 1.3 grams/$cm^3$.

**24.** The method of claim 23, wherein the sulfur-containing polyureaurethane further having an impact strength of at least 2 joules.

**25.** The method of any of claims 23 and 24, wherein the polyiso(thio)cyanate, the at least one hydrogen-containing material, the episulfide-containing material, the amine-containing curing agent, the NCO/OH equivalent ratio of the prepolymer, and the $NCO/NH_2$ equivalent ratio is defined as in any of claims 4-22.

**26.** An optical article comprising a sulfur-containing polyureaurethane according to any of claims 1-22.

**27.** The optical article of claim 26, being photochromic.

**Patentansprüche**

**1.** Schwefelhaltiges Polyharnstoffurethan, das, wenn zumindest teilweise gehärtet, einen Brechungsindex von wenigstens 1,57, eine Abbe-Zahl von wenigstens 35 und eine Dichte von weniger als 1,3 g/$cm^3$ aufweist.

**2.** Schwefelhaltiges Polyharnstoffurethan nach Anspruch 1, das weiterhin eine Schlagzähigkeit von wenigstens 2 Joule aufweist.

**3.** Schwefelhaltiges Polyharnstoffurethan nach einem der Ansprüche 1 und 2, das das Rekationsprodukt von:

(a) einem Prepolymer, erhalten aus einem Polyiso(thio)cyanat und wenigstens einem wasserstoffhaltigen Material, ausgewählt aus einem OH-haltigen Material, einem SH-haltigen Material und Mischungen davon,
(b) wenigstens einem episulfidhaltigen Material und
(c) einem aminhaltigen Härtungsmittel.

**4.** Schwefelhaltiges Polyharnstoffurethan nach Anspruch 3, wobei dieses Polyiso(thio)cyanat ausgewählt ist aus Polyisocyanat, Polyisothiocyanat und Mischungen davon.

**5.** Schwefelhaltiges Polyharnstoffurethan nach Anspruch 4, wobei dieses Polyiso(thio)cyanat ausgewählt ist aus aliphatischen Polyisocyanaten, cycloaliphatischen Polyisocyanaten, aromatischen Polyisocyanaten und Mischungen davon.

**6.** Schwefelhaltiges Polyharnstoffurethan nach Anspruch 5, wobei dieses Polyiso(thio)cyanat ausgewählt ist aus aliphatischen Diisocyanaten, cycloaliphatischen Diisocyanaten, aromatischen Diisocyanaten, cyclischen Dimeren und cyclischen Trimeren davon und Mischungen davon.

**7.** Schwefelhaltiges Polyharnstoffurethan nach Anspruch 5, wobei dieses Polyiso(thio)cyanat Dicyclohexylmethandiisocyanat und isomere Mischungen davon enthält.

**8.** Schwefelhaltiges Polyharnstoffurethan nach Anspruch 5, wobei dieses Polyiso(thio)cyanat ausgewählt ist aus trans, trans-Isomer von 4,4'-Methylenbis(cyclohexylisocyanat).

**9.** Schwefelhaltiges Polyharnstoffurethan nach Anspruch 5, wobei dieses Polyiso(thio)cyanat ausgewählt ist aus 3-Isocyanato-methyl-3,5,5-trimethylcyclohexyl-isocyanat, meta-Tetramethylxyloldiisocyanat (1,3-Bis(1-isocyanato-1-methylethyl)benzol) und Mischungen davon.

**10.** Schwefelhaltiges Polyharnstoffurethan nach einem der Ansprüche 3-9, wobei dieses wasserstoffhaltige Material ausgewählt ist aus Polyolen, Polythiolen und Stoffen mit sowohl hydroxyl- und thiolfunktionellen Gruppen.

**11.** Schwefelhaltiges Polyharnstoffurethan nach Anspruch 10, wobei dieses wasserstoffhaltige Material ausgewählt ist aus Polyesterpolyolen, Polycaprolactonpolyolen, Polyetherpolyolen, Polycarbonatpolyolen und Mischungen davon.

**12.** Schwefelhaltiges Polyharnstoffurethan nach Anspruch 3, wobei dieses wasserstoffhaltige Material ein gewichtsmittleres Molekulargewicht von 200 bis 32.000 aufweist.

**13.** Schwefelhaltiges Polyharnstoffurethan nach Anspruch 12, wobei dieses wasserstoffhaltige Material ein gewichtsmittleres Molekulargewicht von etwa 2.000 bis 15.000 aufweist.

**14.** Schwefelhaltiges Polyharnstoffurethan nach Anspruch 3, wobei dieses wasserstoffhaltige Material Blockeinheiten, die sich von einem Polyetherpolyol ableiten, enthält.

**15.** Schwefelhaltiges Polyharnstoffurethan nach Anspruch 14, wobei dieses Polyetherpolyol die folgende Formel aufweist:

$$H\text{-}(O\text{-}CRRCRR\text{-}Y_n)_a\text{-}(CRRCRR\text{-}Y_n\text{-}O)_b\text{-}(CRRCRR\text{-}Y_n\text{-}O)_c\text{-}H$$

worin R für Wasserstoff oder $C_1$- bis $C_6$-Alkyl stehen kann, Y für $CH_2$ stehen kann, n eine ganze Zahl von 0 bis 6 sein kann, a, b und c jeweils eine ganze Zahl von 0 bis 300 sein können, worin a, b und c so ausgewählt sind, dass das gewichtsmittleres Molekulargewicht des Polyols 32.000 nicht überschreitet.

**16.** Schwefelhaltiges Polyharnstoffurethan nach Anspruch 10, wobei dieses Polythiol ausgewählt ist aus aliphatischen Polythiolen, cycloaliphatischen Polythiolen, aromatischen Polythiolen, polymeren Polythiolen, Polythiolen, die Etherverknüpfungen aufweisen, Polythiolen, die Sulfidverknüpfungen aufweisen, Polythiolen, die Polysulfidverknüpfungen aufweisen.

**17.** Schwefelhaltiges Polyharnstoffurethan nach Anspruch 3, wobei dieses Prepolymer ein NCO/OH-Äquivalentverhältnis von 2,0 bis weniger als 4,5 aufweist.

**18.** Schwefelhaltiges Polyharnstoffurethan nach einem der Ansprüche 3-17, wobei wenigstens eines dieses episulfidhaltigen Materials die folgende Einheit enthält:

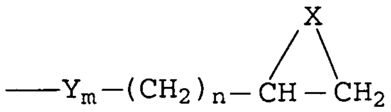

worin X ausgewählt ist aus S und O und Y ausgewählt ist aus $C_1$- bis $C_{10}$-Alkyl, O und S, m eine ganze Zahl von 0 bis 2 ist und n eine ganze Zahl von 0 bis 10 ist.

**19.** Schwefelhaltiges Polyharnstoffurethan nach einem der Ansprüche 3-18, wobei dieses aminhaltige Härtungsmittel ausgewählt ist aus Stoffen mit der folgenden chemischen Formel und Mischungen davon:

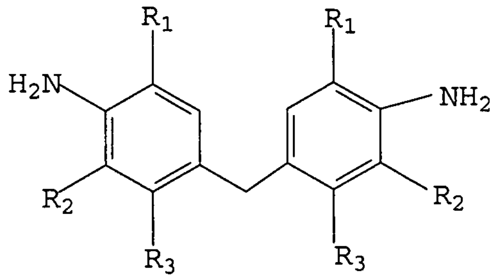

worin $R_1$ und $R_2$ jeweils unabhängig voneinander aus Methyl-, Ethyl-, Propyl- und Isopropylgruppen ausgewählt sind und $R_3$ aus Wasserstoff und Chlor ausgewählt ist.

**20.** Schwefelhaltiges Polyharnstoffurethan nach Anspruch 19, wobei dieses aminhaltige Härtungsmittel 4,4'-Methylenbis (3-chlor-2,6-diethylanilin) ist.

**21.** Schwefelhaltiges Polyharnstoffurethan nach einem der Ansprüche 3-18, wobei dieses aminhaltige Härtungsmittel ausgewählt ist aus 2,4-Diamino-3,5-diethyltoluol, 2,6-Diamino-3,5-diethyltoluol und Mischungen davon.

**22.** Schwefelhaltiges Polyharnstoffurethan nach Anspruch 3, wobei dieses aminhaltige Härtungsmittel in einem $NCO/NH_2$-Äquivalentverhältnis von 1,0 NCO/0,60 $NH_2$ bis 1,0 NCO/1,20 $NH_2$ vorhanden ist.

**23.** Verfahren zur Herstellung eines schwefelhaltigen Polyharnstoffurethans, umfassend die Schritte:

(a) Erhalten eines Prepolymers durch Umsetzen eines Polyiso(thio)cyanats und wenigstens eines wasserstoffhaltigen Materials, ausgewählt aus Polyolen, Polythiolen und Materialien mit sowohl hydroxyl- als auch thiolfunktionellen Gruppen,
(b) Umsetzen dieses Prepolymers mit wenigstens einem episulfidhaltigen Material und
(c) Umsetzen der Mischung aus Schritt (b) mit einem aminhaltigen Härtungsmittel,

wobei es, wenn es zumindest teilweise gehärtet ist, einen Brechungsindex von wenigstens 1,57, eine Abbe-Zahl von wenigstens 35 und eine Dichte von weniger als 1,3 $g/cm^3$ aufweist.

**24.** Verfahren nach Anspruch 23, wobei das schwefelhaltige Polyharnstoffurethan zusätzlich eine Schlagzähigkeit von wenigstens 2 Joule aufweist.

**25.** Verfahren nach einem der Ansprüche 23 und 24, wobei das Polyiso(thio)cyanat, das wenigstens eine wasserstoffhaltige Material, das episulfidhaltige Material, das aminhaltige Härtungsmittel, das NCO/OH-Äquivalentverhältnis des Prepolymers und das $NCO/NH_2$-Äquivalentverhältnis wie in einem der Ansprüche 4-22 definiert ist.

**26.** Optischer Gegenstand, enthaltend ein schwefelhaltiges Polyharnstoffurethan gemäß einem der Ansprüche 1-22.

27. Optischer Gegenstand nach Anspruch 26, der photochrom ist.

## Revendications

1. Polyurée-uréthane contenant du soufre possédant, quand il est au moins partiellement réticulé, un indice de réfraction d'au moins 1,57, un nombre d'Abbe d'au moins 35 et une masse volumique inférieure à 1,3 gramme/$cm^3$.

2. Polyurée-uréthane contenant du soufre selon la revendication 1, possédant en outre une résistance au choc d'au moins 2 joules.

3. Polyurée-uréthane contenant du soufre selon l'une quelconque des revendications 1 et 2, comprenant le produit réactionnel :

   (a) d'un prépolymère obtenu à partir d'un polyiso(thio)cyanate et d'au moins une substance contenant un hydrogène choisie parmi une substance contenant OH, une substance contenant SH et leurs mélanges ;
   (b) d'au moins une substance contenant un épisulfure ; et
   (c) d'un agent de réticulation contenant une amine.

4. Polyurée-uréthane contenant du soufre selon la revendication 3, dans lequel ledit polyiso(thio)cyanate est choisi parmi le polyisocyanate, le polyisothiocyanate et leurs mélanges.

5. Polyurée-uréthane contenant du soufre selon la revendication 4, dans lequel ledit polyiso(thio)cyanate est choisi parmi des polyisocyanates aliphatiques, des polyisocyanates cycloaliphatiques, des polyisocyanates aromatiques et leurs mélanges.

6. Polyurée-uréthane contenant du soufre selon la revendication 5, dans lequel ledit polyiso(thio)cyanate est choisi parmi des diisocyanates aliphatiques, des diisocyanates cycloaliphatiques, des diisocyanates aromatiques, leurs dimères cycliques et leurs trimères cycliques, et leurs mélanges.

7. Polyurée-uréthane contenant du soufre selon la revendication 5, dans lequel ledit polyiso(thio)cyanate comprend le diisocyanate de dicyclohexylméthane et ses mélanges isomériques.

8. Polyurée-uréthane contenant du soufre selon la revendication 5, dans lequel ledit polyiso(thio)cyanate est choisi parmi l'isomère trans, trans du 4,4'-méthylènebis(isocyanate de cyclohexyle).

9. Polyurée-uréthane contenant du soufre selon la revendication 5, dans lequel ledit polyiso(thio)cyanate est choisi parmi le 3-isocyanato-méthyl-3,5,5-triméthyl cyclohexyl-isocyanate ; le méta-tétraméthylxylène diisocyanate (1,3-bis(1-isocyanato-1-méthyléthyl)-benzène) et leurs mélanges.

10. Polyurée-uréthane contenant du soufre selon l'une quelconque des revendications 3 à 9, dans lequel ladite substance contenant un hydrogène est choisie parmi des polyols, des polythiols et des substances contenant à la fois des groupes fonctionnels hydroxyle et thiol.

11. Polyurée-uréthane contenant du soufre selon la revendication 10, dans lequel ladite substance contenant un hydrogène est choisie parmi des polyester polyols, des polycaprolactone polyols, des polyéther polyols, des polycarbonate polyols et leurs mélanges.

12. Polyurée-uréthane contenant du soufre selon la revendication 3, dans lequel ladite substance contenant un hydrogène possède un poids moléculaire moyen en poids allant de 200 à 32 000.

13. Polyurée-uréthane contenant du soufre selon la revendication 12, dans lequel ladite substance contenant un hydrogène possède un poids moléculaire moyen en poids allant d'environ 2 000 à 15 000.

14. Polyurée-uréthane contenant du soufre selon la revendication 3, dans lequel ladite substance contenant un hydrogène comprend des fragments séquencés dérivés d'un polyéther polyol.

15. Polyurée-uréthane contenant du soufre selon la revendication 14, dans lequel ledit polyéther polyol comprend la

formule suivante :

$$H\text{-}(O\text{-}CRRCRR\text{-}Y_n)_a\text{-}(CRRCRR\text{-}Y_n\text{-}O)_b\text{-}(CRRCRR\text{-}Y_n\text{-}O)_c\text{-}H$$

dans laquelle R peut représenter un hydrogène ou un alkyle en $C_1$ à $C_6$ ; Y peut représenter $CH_2$ ; n peut être un nombre entier allant de 0 à 6 ; a, b et c peuvent chacun être un entier allant de 0 à 300, a, b et c étant choisi de manière à ce que le poids moléculaire moyen en poids du polyol ne dépasse pas 32 000.

**16.** Polyurée-uréthane contenant du soufre selon la revendication 10, dans lequel ledit polythiol est choisi parmi des polythiols aliphatiques, des polythiols cycloaliphatiques, des polythiols aromatiques, des polythiols polymériques, des polythiols contenant des liaisons éthers, des polythiols contenant des liaisons sulfures, des polythiols contenant des liaisons polysulfures.

**17.** Polyurée-uréthane contenant du soufre selon la revendication 3, dans lequel ledit prépolymère possède un rapport en nombre d'équivalent de NCO/OH allant de 2,0 à moins de 4,5.

**18.** Polyurée-uréthane contenant du soufre selon l'une quelconque des revendications 3 à 17, dans lequel au moins une desdites substances contenant un épisulfure contient le fragment suivait :

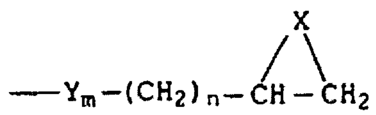

dans lequel X est choisi parmi S et O, et Y est choisi parmi un alkyle en $C_1$ à $C_{10}$, O et S, m est un nombre entier allant de 0 à 2 et n est un nombre entier allant de 0 à 10.

**19.** Polyurée-uréthane contenant du soufre selon l'une quelconque des revendications 3 à 18, dans lequel ledit agent de réticulation contenant une amine est choisi parmi des substances possédant la formule chimique suivante et leurs mélanges :

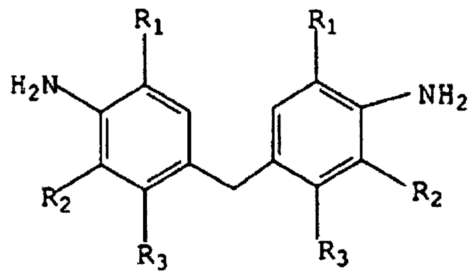

dans laquelle $R_1$ et $R_2$ sont chacun indépendamment choisi parmi les groupes méthyle, éthyle, propyle et isopropyle, et $R_3$ est choisi parmi un hydrogène et un chlore.

**20.** Polyurée-uréthane contenant du soufre selon la revendication 19, dans lequel ledit agent de réticulation contenant une amine est la 4,4'-méthylène-bis(3-chloro-2,6-diéthylaniline).

**21.** Polyurée-uréthane contenant du soufre selon l'une quelconque des revendications 3 à 18, dans lequel ledit agent de réticulation contenant une amine est choisi parmi le 2,4-diamino-3,5-diéthyl-toluène ; le 2,6-diamino-3,5-diéthyl-toluène et leurs mélanges.

**22.** Polyurée-uréthane contenant du soufre selon la revendication 3, dans lequel ledit agent de réticulation contenant une amine est présent selon un rapport en nombre d'équivalent de $NCO/NH_2$ allant de 1,0 $NCO/0,60\ NH_2$ à 1,0 $NCO/1,20\ NH_2$.

**23.** Procédé de préparation d'un polyurée-uréthane contenant du soufre comprenant les étapes suivantes :

(a) obtenir un prépolymère par faire réagir un polyiso(thio)cyanate et au moins une substance contenant un hydrogène choisie parmi des polyols, des polythiols et des substances contenant à la fois des groupes fonctionnels hydroxyle et thiol ;
(b) faire réagir ledit prépolymère avec au moins une substance contenant un épisulfure ; et
(c) faire réagir le mélange de l'étape (b) avec un agent de réticulation contenant une amine

dans lequel, quand il est au moins partiellement réticulé, il possède un indice de réfraction d'au moins 1,57, un nombre d'Abbe d'au moins 35 et une masse volumique inférieure à 1,3 gramme/$cm^3$.

**24.** Procédé selon la revendication 23, dans lequel le polyurée-uréthane contenant du soufre possède en outre une résistance au choc d'au moins 2 joules.

**25.** Procédé selon l'une quelconque des revendications 23 et 24, dans lequel le polyiso(thio)cyanate, ladite au moins une substance contenant un hydrogène, la substance contenant un épisulfure, l'agent de réticulation contenant une amine, le rapport en nombre d'équivalent de NCO/OH du prépolymère et le rapport en nombre d'équivalent de $NCO/NH_2$ sont définis dans l'une quelconque des revendications 4 à 22.

**26.** Article optique comprenant un polyurée-uréthane contenant du soufre selon l'une quelconque des revendications 1 à 22.

**27.** Article optique selon la revendication 26, qui est photochromique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2644007 A
- US 2680127 A
- US 6187444 B1
- US 4160853 A
- US 5807975 A
- US 5945504 A
- US 5693738 A
- US 3562172 A
- US 3578602 A
- US 4215010 A
- US 4342668 A
- US 5405958 A
- US 4637698 A
- US 4931219 A
- US 4816584 A
- US 4880667 A
- US 4818096 A
- US 3567605 A
- US 4826977 A
- US 5066818 A
- US 5466398 A
- US 5384077 A
- US 5238931 A
- US 5274132 A
- US 5429774 A
- US 3361706 A
- US 4931220 A
- US 4166043 A
- US 4367170 A


### Non-patent literature cited in the description


- Ullmann's Encyclopedia of Industrial Chemistry. 1992, vol. A21, 673-674